# EUROPEAN PATENT APPLICATION

(11) **EP 4 645 826 A1**
(43) Date of publication of application: **05.11.2025**
(21) Application number: 24758695.1
(22) Date of filing: 08.03.2024
(51) Int. Cl.: H04L 67/10, H04L 45/0377, H04L 12/46, H04L 45/00, H04L 45/64, H04L 45/74, H04L 45/745, H04L 69/22

(54) **COMPUTING POWER ACCESS METHOD, APPARATUS, NETWORK DEVICE AND STORAGE MEDIUM**

(71) Applicant: New H3C Technologies Co., Ltd., Hangzhou, Zhejiang 310052 (CN)
(72) Inventor: FU, Zhihua, Beijing 100102 (CN)
(74) Representative: Zimmermann & Partner Patentanwälte mbB
(86) International application number: PCT/CN2024/080669
(87) International publication number: WO 2025/184883

(57) **Abstract**

A computing access method, apparatus, a network device and a storage medium relate to the field of communication technology. The method comprises: a first gateway device receiving a first computing access packet sent by a client that accesses a computing network through the first gateway device, wherein a destination address of the first computing access packet is the address of a target computing service; based on a pre-stored first computing routing table, determining the address of a second gateway device corresponding to the address of the target computing service, wherein the computing routing table comprises the address of a computing service and the address of a gateway device connected to a service node, where a service instance that provides the computing service is located, when the service node accesses the computing network; based on the addresses of the first and second gateway devices, encapsulates the first computing access packet, to obtain a second computing access packet; and sends the second computing access packet to the second gateway device. This provides a data plane forwarding technology to achieve computing access.

## Description

### TECHNICAL FIELD

The present disclosure relates to the field of communication technology, and in particular to a computing access method and apparatus, a network device and a storage medium.

### BACKGROUND

A computing network is a new type of information infrastructure that provides an integrated service for a customer by sensing a network status and a cloud computing status. Currently, the computing network uses a bearer network based on a Segment Routing over Internet Protocol IP Version 6 (IPv6) (SRv6) technology as a data plane. A client accesses a server through an SRv6 path to obtain a computing service from the server. However, the method for data plane forwarding based on SRv6 technology to achieve computing access is just a concept, and there is no definite data plane forwarding technology to achieve computing access to the computing network.

### SUMMARY

The purpose of examples of the present disclosure is to provide a computing access method and apparatus, a network device and a storage medium, so as to provide a data plane forwarding technology to achieve computing access. The specific technical solutions are as follows.

In a first aspect, examples of the present disclosure provide a computing access method, which is applied to a first gateway device, the method includes:
receiving a first computing access packet sent by a client, wherein the client accesses a computing network through the first gateway device, and a destination address of the first computing access packet is an address of a target computing service;
determining an address of a second gateway device corresponding to the address of the target computing service based on a pre-stored first computing routing table, wherein the first computing routing table comprises an address of a computing service and an address of a gateway device connected to a service node, where a service instance that provides the computing service is located, when the service node accesses the computing network;
encapsulating the first computing access packet based on an address of the first gateway device and the address of the second gateway device, to obtain a second computing access packet;
sending the second computing access packet to the second gateway device.

In the second aspect, examples of the present disclosure provide a computing access method, which is applied to a second gateway device, the method includes:
receiving a second computing access packet from a first gateway device, wherein the first gateway device is a gateway device connected to a client when the client accesses a computing network, the second computing access packet is a packet encapsulated by the first gateway device based on an address of the first gateway device and an address of the second gateway device, after determining the address of the second gateway device based on a pre-stored first computing routing table and a destination address of a first computing access packet sent by the client, wherein the destination address of the first computing access packet is an address of a target computing service, the first computing routing table comprises an address of a computing service, and an address of a gateway device connected to a service node, where a service instance that provides the computing service is located, when the service node accesses the computing network;
decapsulating the second computing access packet, to obtain a third computing access packet;
determining an address of a target proxy device corresponding to the address of the target computing service based on a pre-stored second computing routing table, wherein the second computing routing table comprises an address of a computing service and an address of a proxy device of a service instance that provides the computing service;
sending the third computing access packet to a target service instance that provides the target computing service, based on the address of the target proxy device.

In a third aspect, examples of the present disclosure provide a computing access method, which is applied to an operation and maintenance platform, the method includes:
obtaining a name of a target computing service from a client;
determining an address of the target computing service corresponding to the name of the target computing service based on a pre-stored correspondence between a name of a computing service and an address of the computing service;
sending the address of the target computing service to the client, so that the client accesses a target service node, where a target service instance that provides the target computing service is located, through a first gateway device and a second gateway device in a computing network based on the address of the target computing service, wherein the client accesses the computing network through the first gateway device, and the target service node accesses the computing network through the second gateway device.

In a fourth aspect, examples of the present disclosure provide a computing access method, which is applied to a client that accesses a computing network through a first gateway device, the method includes:
obtaining an address of a target computing service;
generating a first computing access packet whose destination address is the address of the target computing service;
sending the first computing access packet to the first gateway device, wherein the client accesses the computing network through the first gateway device, so that the first gateway device sends the first computing access packet through the second gateway device to a target service node, where a target service instance that provides the target computing service is located, and the target service node accesses the computing network through the second gateway device.

In a fifth aspect, examples of the present disclosure provide a computing access apparatus, which is applied to a first gateway device, the apparatus includes:
a first receiving module, to receive a first computing access packet sent by a client, wherein the client accesses a computing network through the first gateway device, and a destination address of the first computing access packet is an address of a target computing service;
a determining module, to determine an address of a second gateway device corresponding to the address of the target computing service based on a pre-stored first computing routing table, wherein the first computing routing table comprises an address of a computing service and an address of a gateway device connected to a service node, where a service instance that provides the computing service is located, when the service node accesses the computing network;
an encapsulating module, to encapsulate the first computing access packet based on an address of the first gateway device and the address of the second gateway device, to obtain a second computing access packet;
a sending module, to send the second computing access packet to the second gateway device.

In a sixth aspect, examples of the present disclosure provide a computing access apparatus, which is applied to a second gateway device, the apparatus includes:
a first receiving module, to receive a second computing access packet from a first gateway device, wherein the first gateway device is a gateway device connected to a client when the client accesses a computing network, the second computing access packet is a packet encapsulated by the first gateway device based on an address of the first gateway device and an address of the second gateway device, after determining the address of the second gateway device based on a pre-stored first computing routing table and a destination address of a first computing access packet sent by the client, wherein the destination address of the first computing access packet is an address of a target computing service, the first computing routing table comprises an address of a computing service, and an address of a gateway device connected to a service node, where a service instance that provides the computing service is located, when the service node accesses the computing network;
a decapsulating module, to decapsulate the second computing access packet, to obtain a third computing access packet;
a determining module, to determine an address of a target proxy device corresponding to the address of the target computing service based on a pre-stored second computing routing table, wherein the second computing routing table comprises an address of a computing service and an address of a proxy device of a service instance that provides the computing service;
a first sending module, to send the third computing access packet to a target service node, where a target service instance that provides the target computing service is located, based on the address of the target proxy device.

In a seventh aspect, examples of the present disclosure provide a computing access apparatus, which is applied to an operation and maintenance platform, the apparatus includes:
a first obtaining module, to obtain a name of a target computing service from a client;
a first determining module, to determine an address of the target computing service corresponding to the name of the target computing service based on a pre-stored correspondence between a name of a computing service and an address of the computing service;
a first sending module, to send the address of the target computing service to the client, so that the client accesses a target service node, where a target service instance that provides the target computing service is located, through a first gateway device and a second gateway device in a computing network based on the address of the target computing service, wherein the client accesses the computing network through the first gateway device, and the target service node accesses the computing network through the second gateway device.

In an eighth aspect, examples of the present disclosure provide a computing access apparatus, which is applied to a client that accesses the computing network through a first gateway device, the apparatus includes:
an obtaining module, to obtain an address of a target computing service;
a generating module, to generate a first computing access packet whose destination address is the address of the target computing service ;
a sending module, to send the first computing access packet to the first gateway device, wherein the client accesses the computing network through the first gateway device, so that the first gateway device sends the first computing access packet through the second gateway device to a target service node, where a target service instance that provides the target computing service is located, and the target service node accesses the computing network through the second gateway device.

In a ninth aspect, an example of the present disclosure provides a network device, which includes a processor and a machine-readable storage medium, wherein the machine-readable storage medium stores machine-executable instructions thereon, which can be executed by the processor to cause the processor to carry out any one of the computing access methods provided by the first aspect, or carry out any one of the computing access methods provided by the second aspect, or carry out any one of the computing access methods provided by the third aspect, or carry out any one of the computing access methods provided by the fourth aspect.

In a tenth aspect, an example of the present disclosure provides a computer-readable storage medium, which stores a computer program thereon, wherein the computer program, when executed by a processor, carries out any one of the computing access methods provided by the first aspect, or carries out any one of the computing access methods provided by the second aspect, or carries out any one of the computing access methods provided by the third aspect, or carries out any one of the computing access methods provided by the fourth aspect.

In an eleventh aspect, an example of the present disclosure provides a computer program product which, when running on a computer, causes the computer to carry out any one of the computing access methods provided by the first aspect, or carry out any one of the computing access methods provided by the second aspect, or carry out any one of the computing access methods provided by the third aspect, or carry out any one of the computing access methods provided by the fourth aspect.

In the technical solution provided by the example of the present disclosure, an address is allocated for a computing service, a client constructs a computing access packet whose destination address is the address of a target computing service, and sends the computing access packet to a first gateway device in a computing network. The first gateway device and a second gateway device in the computing network respectively store a computing routing table containing the address of the computing service. The first gateway device and the second gateway device query the computing routing table based on the address of the target computing service carried in the computing access packet, and send the computing access packet to a target service node where a target service instance that provides the target computing service is located, realizing data plane forwarding and completing computing access.

Of course, it is not necessary for any product or method implementing the present disclosure to achieve all the advantages described above simultaneously.

### BRIEF DESCRIPTION OF THE DRAWINGS

The accompanying drawings described here are used to provide a further understanding of the present disclosure and constitute a part of the present disclosure. The illustrative examples of the present disclosure and their descriptions are used to explain the present disclosure and do not constitute an improper limitation on the present disclosure.
Figure 1 is a schematic diagram of a centralized computing network in the related art;
Figure 2 is a schematic diagram of a distributed computing network in the related art;
Figure 3 is a schematic diagram of a computing access system provided by an example of the present disclosure;
Figure 4 is a first schematic flowchart of a computing access method provided by an example of the present disclosure;
Figure 5 is a schematic diagram of a CSID provided by an example of the present disclosure;
Figure 6 is a schematic diagram of a first computing access packet provided by an example of the present disclosure;
Figure 7 is a second schematic flowchart of a computing access method provided by an example of the present disclosure;
Figure 8a is a first schematic diagram of a second computing access packet provided by an example of the present disclosure;
Figure 8b is a second schematic diagram of a second computing access packet provided by an example of the present disclosure;
Figure 8c is a third schematic diagram of a second computing access packet provided by an example of the present disclosure;
Figure 9 is a third schematic flow diagram of a computing access method provided by an example of the present disclosure;
Figure 10 is a schematic flowchart of an address allocation method for computing access provided by an example of the present disclosure;
Figure 11 is a fourth schematic flowchart of a computing access method provided by an example of the present disclosure;
Figure 12 is a signaling schematic diagram of a preparation phase for computing access provided by an example of the present disclosure;
Figure 13 is a signaling schematic diagram of an execution phase for computing access provided by an example of the present disclosure;
Figure 14 is a first structural schematic diagram of a computing access apparatus provided by an example of the present disclosure;
Figure 15 is a second structural schematic diagram of a computing access apparatus provided by an example of the present disclosure;
Figure 16 is a third structural schematic diagram of a computing access apparatus provided by an example of the present disclosure;
Figure 17 is a fourth structural schematic diagram of a computing access apparatus provided by an example of the present disclosure;
Figure 18 is a schematic structural diagram of a network device provided by an example of the present disclosure.

### DETAILED DESCRIPTION

In order to make the objective, technical solutions and advantages of the present disclosure clearer and more understandable, the present disclosure will be described in more detail below with reference to the accompanying drawings and examples. Obviously, the described examples are only some, and not all, of the examples of the present disclosure. All other examples obtained based on the examples of the present disclosure by those skilled in the art fall into the scope of protection of the present disclosure.

For ease of understanding, the terms appeared in the examples of the present disclosure are explained below.

Computing resource pool: a resource pool that provides a computing resource or a computing service. The computing resource pool can exist in the form of a cloud, including a central cloud, a regional cloud, an edge cloud, etc., and the computing resource pool can also be in a form other than a cloud, which is not limited.

Computing network: a super large system with the convergence of computing and network, formed by the interconnection of computing resource pools at different levels such as a cloud, an edge and a terminal through a high-speed connection network. This system can provide a unified social-level computing service externally. Wherein, cloud is an abbreviation of a computing cloud, which is a super computing model based on the network "cloud". In a remote data center, thousands of computers and servers are connected to form a computing cloud; edge is an abbreviation of a Multi-access Edge Computing (MEC) network architecture, which provides a cloud computing function and information technology (IT) service environment at the edge of the network; end is an abbreviation of a terminal, which represents all devices with Internet and computing capabilities.

Computing Service Identity (CSID): a logical concept, to identify a computing service that is deployed in a computing resource pool and can be provided externally. The computing service indicated by the CSID is independent of a physical location of an entity that actually provides the computing service. A computing service can be composed of multiple computing service instances (CSI) with the same functions. These CSIs can be located in computing resource pools in different physical locations. In an example of the present disclosure, the CSID may represent an address of the computing service, and the computing service instance is an abbreviation of a service instance.

Computing Service Instance Identity (CSIID): to identify a service instance that actually provides a computing service under a certain CSID, such as the above CSI. In an example of the present disclosure, a service instance that provides a computing service is deployed on a service node, and one or more service instances can be deployed on one service node. In the example of the present disclosure, the CSIID may represent an address of the service instance. For multiple service instances deployed on the same service node, the CSIIDs of the multiple service instances can be different or the same, for example, the CSIIDs of multiple service instances are all the IP address of the service node where they are located. However, for service instances with the same CSIID, they provide different computing services, that is, their corresponding CSIDs are different.

Client: an initiator of a computing request.

Server: a service provider for a computing request, wherein the server can be located on a cloud server or a non-cloud server, such as the above central cloud, regional cloud, edge cloud and other computing resource pools. The server can include one or more service nodes.

Gateway device (GW): an edge device of the computing network. GW includes an entrance GW, an exit GW, etc.. In an example of the present disclosure, the GW supports a computing routing function.

A computing network is a new type of information infrastructure. The computing network provides an integrated service to a client by simultaneously sensing a network status and a computing status of the cloud.

The computing network includes an operation and maintenance platform, a network controller, a cloud management platform, a computing network and a server, etc.. The operation and maintenance platform is a brain of the computing network, referred to as a computing network brain, which is a centralized upper-layer software platform. The operation and maintenance platform is for the orchestration and scheduling of computing services, etc., and provides a centralized control over computing resources in the computing network. The network controller is a centralized upper-layer software platform used to issue a network policy and path. The cloud management platform is a software platform used to manage and monitor computing resource pools. A Provider Edge (PE) device and an intermediate device are deployed in the computing network, wherein the PE device is a GW, the PE device connected to a client can be referred to as a network PE, that is, an entrance GW, and the PE device connected to a server can be referred to as a cloud PE, that is, an exit GW. An intermediate device is for routing and forwarding between the PE devices.

On the technical route, there are two forms of computing networks: a centralized computing network and a distributed computing network.

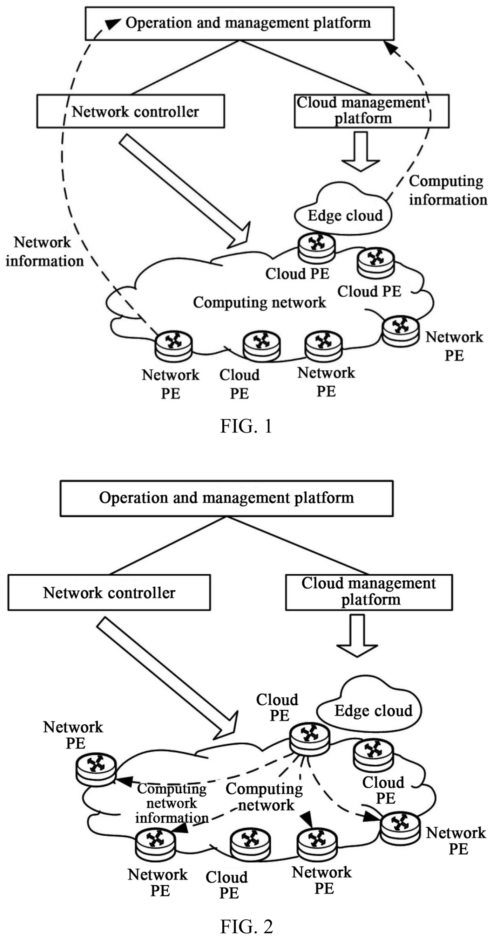

The architecture of a centralized computing network can be seen in Figure 1. In the centralized computing network, an operation and maintenance platform is for the orchestration and scheduling of computing services, etc., and provides a centralized control over computing resources in the computing network. The operation and maintenance platform is responsible for collecting computing network information such as computing information and network information of the entire computing network, maintaining a computing topology and a network topology of the computing network based on the collected computing network information, selecting an appropriate cloud for a client, and enabling the availability of a network path.

The architecture of a distributed computing network can be seen in Figure 2. In the distributed computing network, computing network information is transmitted in the computing network, so that all PE devices maintain the computing network information such as computing information and network information. Each PE device can perform policy and route selection based on the computing network information to provide an appropriate computing service to a client.

Currently, a computing network uses a bearer network based on Segment Routing over IPv6 (SRv6) technology as a data plane. A client accesses a server through an SRv6 path to obtain a computing service from the server. However, a method for data plane forwarding based on SRv6 technology to achieve computing access is just a concept, and there is no definite data plane forwarding technology to achieve computing access to the computing network.

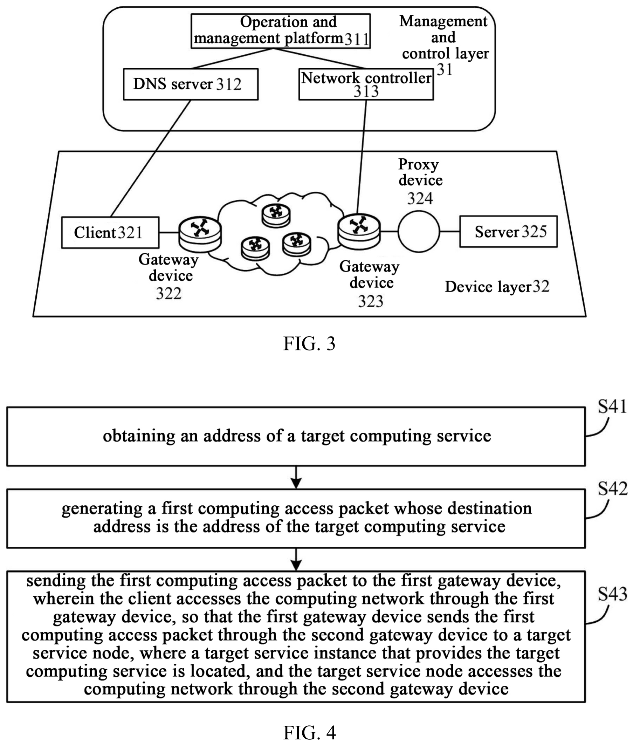

In order to realize computing access to a computing network, examples of the present disclosure provide a computing access system, as shown in Figure 3, the computing access system is divided into a management and control layer 31 and a device layer 32. The management and control layer 31 may include an operation and maintenance platform 311, a domain name system (DNS) server 312, a network controller 313, etc.. The device layer 32 may include a client 321, a gateway device 322, a gateway device 323, a proxy device 324, a server 325, etc..

The operation and maintenance platform 311 is for the orchestration and scheduling of computing services provided by a computing network, and can further be called a computing network brain.

The DNS server 312 is to provide a domain name resolution service. The DNS server 312 is communicatively connected with the operation and maintenance platform 311.

The network controller 313 is to issue a network policy and path. The network controller 313 is communicatively connected with the operation and maintenance platform 311. The operation and maintenance platform 311 formulates the network policy and path, and then issues the network policy and path to a gateway device, such as the gateway device 323 in Figure 3, through the network controller 313. In the example of the present disclosure, the described communication between the operation and maintenance platform 311 and the gateway device is achieved through the network controller 313. For convenience of description, the network controller 313 is omitted below.

In examples of the present disclosure, the operation and maintenance platform 311, the DNS server 312 and the network controller 313 can be deployed on different physical machines or integrated on the same physical machine, which is not limited.

The client 321 is to initiate a computing access request to request the obtaining of a computing service, such as send a computing access packet to the gateway device 322. The client 321 can be a mobile terminal, a personal computer (PC), a smart home or an enterprise terminal, etc..

The server 325 is to provide a computing service, such as receive and process a computing access packet. The server 325 can be a computing resource pool such as a central cloud, an edge cloud, or a regional cloud.

In the computing network, the server 325 may include one or more service instances. One service instance provides one kind of computing service, such as image processing computing service. When one server 325 includes multiple service instances, one or more computing services can be provided externally.

In addition, one computing service can be achieved by one service instance in one server 325, or by multiple service instances in one or more servers 325. For example, an image processing computing service 1 is achieved by a service instance al in a server a and a service instance b1 in a server b, and an image processing computing service 2 is achieved by a service instance a2 in the server a and service instances b2 to b3 in the server b.

The computing network includes multiple routing nodes, such as a gateway device 322, a gateway device 323 and other intermediate nodes. The gateway device 322 is an entrance gateway device of the computing network, that is, it provides the client 321 with an access service to the computing network. The gateway device 323 is an exit gateway device of the computing network, that is, it provides the server 325 with an access service to the computing network.

The proxy device 324 is a proxy of a computing resource pool, that is, an proxy of the server 325, which may also be called an proxy of a service node in the server 325 or an proxy of a service instance in the server 325. The proxy device 324 is to collect network information such as static attribute information and dynamic attribute information of a service instance in the server 325. Wherein, the static attribute information may include one or more of: the address of the computing service, the name of the computing service, the service type of the computing service, the address of the service instance that provides the computing service, the location of the service instance, and the priority of the service instance, and the capability of the service instance in the server 325; the dynamic attribute information may include one or more of the load status and the session status of the service instance.

The proxy device 324 may be located in the server 325, for example the proxy device 324 and one service instance are located on the same service node. The proxy device 324 can also be located outside the server 325, for example the proxy device 324 is an independent physical machine. The location of the proxy device 324 is not specifically limited in the example of the present disclosure.

Based on the above computing access system, the examples of the present disclosure provide a computing access method, as shown in Figure 4, the computing access method is applied to a client that accesses a computing network through a first gateway device. Wherein, the first gateway device may be any gateway device in the computing network. The above computing access method includes the following blocks.
Block S41: the address of a target computing service is obtained;
Block S42: a first computing access packet whose destination address is the address of the target computing service is generated;
Block S43: the first computing access packet is sent to the first gateway device. The client accesses the computing network through the first gateway device, so that the first gateway device sends the first computing access packet through a second gateway device to a target service node where a target service instance that provides the target computing service is located, and the target service node accesses the computing network through the second gateway device.

In the technical solution provided by the examples of the present disclosure, an address is assigned for a computing service, a client constructs a computing access packet whose destination address is the address of the target computing service, and sends the computing access packet to the first gateway device in the computing network, and then the first gateway device and the second gateway device in the computing network query a computing routing table based on the address of the target computing service carried in the computing access packet, and send the computing access packet to a target service node, the target service node uses a target service instance to process the computing access packet, realizing data plane forwarding and completing the computing access.

In the above block S41, the target computing service is a computing service that the client needs to access. The address of the computing service (i.e. CSID) indicates a computing service, that is, the address of the target computing service indicates the target computing service. In the example of the present disclosure, in order to achieve computing access based on the CSID, the CSID is in a same form as the Internet Protocol (IP) address. In one example, the computing network uses a bearer network based on SRv6 technology as the data plane, and the CSID is in the form of an IPv6 address.

The types of computing services are limited. In order to simplify the addresses of computing services and save storage resources of devices such as gateway devices and clients, in the example of the present disclosure, the CSID can be composed of a preset address prefix and the identity of the computing service (server identity, SID). Wherein, the preset address prefix is a prefix shared by all computing services, that is, the preset address prefixes included in all computing services are the same. The preset address prefix can be set according to actual needs. For example, the preset address prefix can be 0000 or 1111 etc.. SID can indicate a computing service.

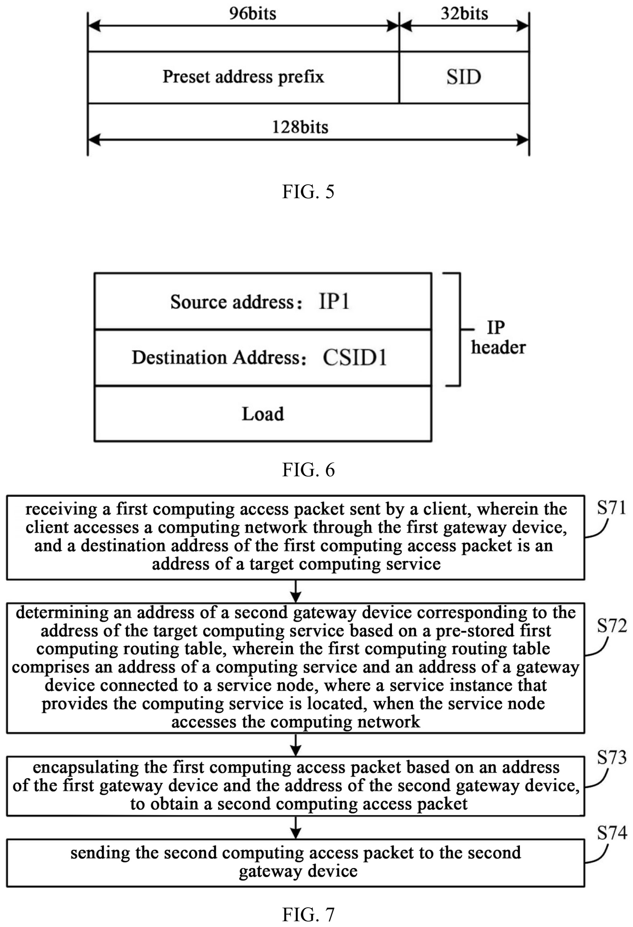

Taking CSID in the form of an IPv6 address as an example, the structure of the CSID can be seen in Figure 5. In Figure 5, the length of the CSID is the same as the length of the IPv6 address, that is, the length of the CSID is 128 bits, the first 12 bytes (96 bits) of the CSID are the preset address prefix, and the last 4 bytes (32 bits) of the CSID are the SID.

In the example of the present disclosure, the SID can uniquely indicate a computing service. Therefore, the SID can be used to represent CSID. The length of the SID is smaller than that of the CSID. Devices such as gateway devices and clients use the SID to represent the CSID, which can greatly save the storage resources occupied when maintaining the CSID.

When accessing computing, the client can obtain the address of the target computing service in the following manners.

Method 1: The client obtains the address of the target computing service locally.

If the client is locally recorded with a correspondence between the name of the target computing service and the address of the target computing service, the client will obtain the address of the target computing service from the locally recorded correspondence between the name of the target computing service and the address of the target computing service based on the name of the target computing service.

Method 2: The client obtains the address of the target computing service through a management and control layer.

If the client is not locally recorded with the correspondence between the name of the target computing service and the address of the target computing service, the client can send a domain name resolution request to the DNS server of the management and control layer, the domain name included in the domain name resolution request is the name of the target computing service. The DNS server extracts the name of the target computing service from the domain name resolution request, and sends the extracted name of the target computing service to the operation and maintenance platform of the management and control layer.

A computing service information database is registered in the operation and maintenance platform, and includes the correspondence between the name of the computing service and the address of the computing service. After obtaining the name of the target computing service, the operation and maintenance platform queries the computing service information database, to obtain the address of the target computing service, and feeds the address of the target computing service back to the DNS server. Correspondingly, the DNS server feeds the address of the target computing service back to the client. The client receives the address of the target computing service fed back by the DNS server.

In the example of the present disclosure, the client can further use other methods to obtain the address of the target computing service, which is not limited.

In the above block S42, the client, after obtaining the address of the target computing service, takes the address of the client as a source address and the address of the target computing service as a destination address, to construct a computing access packet, such as the first computing access packet.

For example, the address of the client is IP1, and the address of the target computing service obtained by the client is CSID1. Based on the obtained address CSID1 of the target computing service, the client generates a computing access packet, the structure of which is shown in Figure 6.

In the above block S43, the target service instance is a service instance that provides the target computing service, and the service node where the target service instance is located is the target service node. The second gateway device can be any gateway device in the computing network. The target service node accesses the computing network through the second gateway device. Specifically, the proxy device of the server where the target service node is located is connected to the second gateway device, so that the target service node accesses the computing network. In order to achieve access to the computing service provided by the service instance, the address of the service instance (i.e. CSIID) is in a same form as the IP address. In one example, the computing network uses a bearer network based on an SRv6 technology as the data plane, and the CSIID is in the form of an IPv6 address.

After generating the first computing access packet, the client sends the first computing access packet to the first gateway device. The first gateway device and a second gateway device respectively store computing routing tables therein, the computing routing table is a routing table to achieve computing access, and includes a CSID, wherein the CSID can be represented by an SID. After receiving the first computing access packet, the first gateway device queries the computing routing table based on the destination address of the first computing access packet (that is, the address of the target computing service), and sends the first computing access packet through the second gateway device to the target service node, so that the client can obtain the target computing service and computing access is achieved. The computing access process based on the computing routing table will be explained in detail below and would not be introduced here.

Based on the above computing access method applied to a client, examples of the present disclosure further provide a computing access method, as shown in Figure 7, which is applied to a first gateway device. The method includes the following blocks:
Block S71: a first computing access packet sent by a client is received, wherein the client accesses a computing network through the first gateway device, and an destination address of the first computing access packet is the address of a target computing service;
Block S72: the address of a second gateway device corresponding to the address of the target computing service is determined based on a pre-stored first computing routing table, which includes the address of a computing service, and the address of a gateway device connected to a service node, where a service instance that provides the computing service is located, when the service node accesses the computing network;
Block S73: the first computing access packet is encapsulated based on the addresses of the first and second gateway devices to obtain a second computing access packet;
Block S74: the second computing access packet is sent to the second gateway device.

In the technical solution provided by the example of the present disclosure, an address is assigned for a computing service, a client constructs a computing access packet whose destination address is the address of a target computing service, and sends the computing access packet to a first gateway device of the computing network. The first gateway device in the computing network stores a computing routing table containing the address of the computing service. Based on the address of the target computing service carried in the computing access packet, the first gateway device queries the computing routing table and sends the computing access packet to the target service node where the target service instance that provides the target computing service is located, to realize data plane forwarding and complete the computing access.

In the above block S71, the client sends the first computing access packet to the first gateway device, and then the first gateway device receives the first computing access packet. Here, the process of the client sending the first computing access packet to the first gateway device may be referred to the above relevant description in Figure 4.

In the above block S72, a computing routing table is pre-stored in the first gateway device, such as the above-mentioned first computing routing table. The first computing routing table may be pre-configured in the first gateway device, or may be generated by the first gateway device based on a routing protocol announcement sent by other gateway devices in the computing network, which is not limited. For example, before receiving the first computing access packet sent by the client, the first gateway device receives a routing protocol announcement sent by the second gateway device. The routing protocol announcement includes static attribute information and dynamic attribute information of the target service instance; the first computing routing table is generated based on the static attribute information and the dynamic attribute information.

In the example of the present disclosure, the first computing routing table includes the address of the computing service and the address of the gateway device connected to the service node, where the service instance that provides the computing service is located, when the service node accesses the computing network. The first computing routing table may further include the address of the service instance that provides the computing service, the routing cost of accessing the service node where the service instance that provides the computing service is located, and the static attribute information of the service instance that provides the computing service. The structure of the first computing routing table can be seen in Table 1.

**Table 1**

| | | | | |
|---|---|---|---|---|
| SID | CSIID | Next hop | Routing cost | Attribute |

Wherein, the SID field is to be filled with the address of the computing service, or be filled with the SID indicating the address of the computing service; the CSIID field is to be filled with the address of the service instance; the next hop field is to be filled with the address of the gateway device connected to the service node when the service node accesses the computing network; the routing cost field is to be filled with the routing cost for accessing the service node. The value of the routing cost can be obtained during the routing protocol announcement; the attribute field is to be filled with computing network information such as static attribute information and dynamic attribute information of the service instance. The computing network information of the service instance can be obtained by a second gateway device from a proxy device of the service node, and sent to the first gateway device through a routing protocol announcement.

After receiving the first computing access packet, the first gateway device extracts a destination address of the first computing access packet, to obtain the address of the target computing service, and then queries the first computing routing table based on the address of the target computing service to obtain the address of the gateway device corresponding to the address of the target computing service, and the address of the gateway device is the address of the second gateway device.

In the example of the present disclosure, in the computing network, there may be multiple service instances in a server connected to one gateway device to provide the target computing service, and there may be multiple gateway devices connected to the server that provides the target computing service. In this case, the first gateway device queries the first computing routing table based on the address of the target computing service, and may obtain multiple routing table entries including the address of the target computing service.

At this time, the first gateway device may determine the address of the second gateway device in any of the following ways.

Method 1: the first gateway device randomly selects one routing table entry from the obtained multiple routing table entries, and takes the address of the gateway device included in the selected routing table entry as the address of the second gateway device.

Method 2: the first computing routing table further includes the routing cost (computing cost) of accessing a node that provides the service; the first gateway device selects one routing table entry with the smallest routing cost from the obtained multiple routing table entries, and takes the address of the gateway device included in the selected routing table entry as the address of the second gateway device. That is, the first gateway device determines the address of the second gateway device that corresponds to the address of the target computing service and has the smallest routing cost based on the pre-stored first computing routing table.

For example, the first computing routing table in the first gateway device is as shown in Table 2.

**Table 2**

| SID | CSIID | Next hop | Routing cost | Attribute |
|---|---|---|---|---|
| SID1 | CSIID1 | GW1 | 100 | Static attribute information 1 |
| SID1 | CSIID2 | GW1 | 150 | Static attribute information 2 |
| SID1 | CSIID3 | GW2 | 80 | Static attribute information 3 |
| SID2 | CSIID4 | GW3 | 100 | Static attribute information 4 |

The SID of the target computing service obtained by the first gateway device is an SID1. Table 2 is queried based on the SID1, and three routing table entries are obtained, that is, the first three routing table entries in Table 2. The minimum routing cost in the three routing table entries is 80. Therefore, the first gateway device selects the third routing table entry, and the address GW2 of the gateway device included in this routing table entry is the address of the second gateway device.

In the example of the present disclosure, the first gateway device may further determine the address of the second gateway device in other ways, for example determine the address of the second gateway device in combination with the static attribute information included in the first computing routing table, which is not limited.

In the above block S73, the first gateway device encapsulates the first computing access packet according to its own address and the address of the second gateway device determined in block S72. The encapsulated packet is a second computing access packet. Then, the first gateway device executes block S74 and sends the second computing access packet to the second gateway device through other nodes in the computing network to achieve access to the target service node, so that the client obtains a target computing service.

In some examples, the above block S73 may be: encapsulating an SRv6 packet header in an outer layer of the first computing access packet, to obtain the second computing access packet, wherein the source address of the SRv6 packet header is the address of the first gateway device, the destination address of the SRv6 packet header is the address of a next hop device of the first gateway device on a forwarding path, and the forwarding path is a path from the first gateway device to the second gateway device.

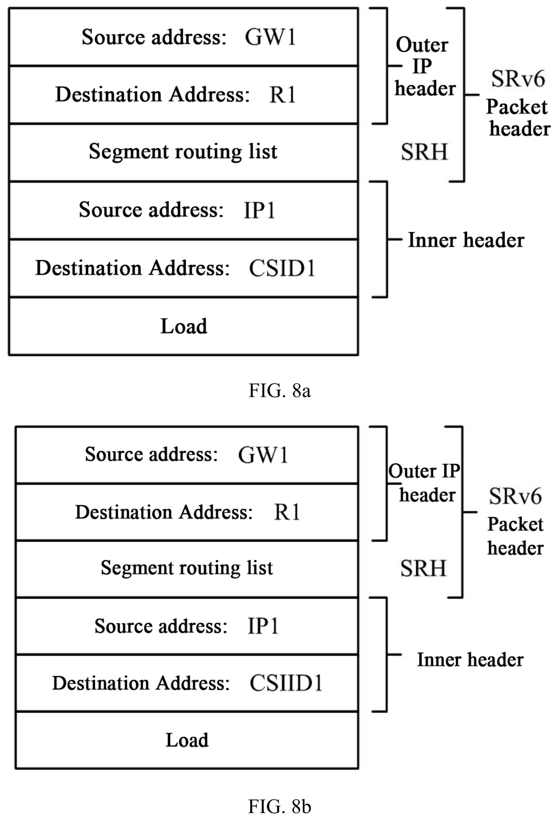

Still take the computing access packet shown in Figure 6 above as an example. The address of the first gateway device is GW1, and the address of the second gateway device is GW2. The first gateway device calculates a forwarding path S from the first gateway device to the second gateway device based on GW1 and GW2, obtains a segment routing list, and then encapsulates an SRv6 packet header in an outer layer of an original first computing access packet to obtain a second computing access packet shown in Figure 8a. In the second computing access packet, the SRv6 packet header is an outer header including an outer IP header and a Segment Routing Header (SRH). An IP header of the first computing access packet is an inner header. In the computing network, each of the routing nodes on the forwarding path S forwards the second computing access packet based on the SRv6 technology until the second gateway device receives the second computing access packet. In Figure 8a, R1 is the address of the next hop device of the first gateway device on the forwarding path S.

In some examples, the first computing routing table may further include the identify of a service instance that provides a computing service, that is, CSIID. In this case, the first gateway device may further determine the address of the target service instance corresponding to the address of the target computing service based on the pre-stored first computing routing table.

Correspondingly, in order to accurately control computing access, the above block S73 may be: encapsulating an SRv6 packet header in an outer layer of the first computing access packet, and modifying the destination address of the first computing access packet to the address of the target service instance, to obtain the second computing access packet, wherein the source address of the SRv6 packet header is the address of the first gateway device, and the destination address of the SRv6 packet header is the address of the next hop device of the first gateway device on the forwarding path, the forwarding path is a path from the first gateway device to the second gateway device.

Still take the computing access packet shown in Figure 6 above as an example. The address of the first gateway device is GW1, the address of the second gateway device is GW2, and the address of the target service instance is CSIID1. The first gateway device calculates a forwarding path S from the first gateway device to the second gateway device based on GW1 and GW2, to obtain a segment routing list, and then encapsulates an SRv6 packet header in an outer layer of an original first computing access packet, and modify the destination address of the first computing access packet to CSIID1, to obtain a second computing access packet shown in Figure 8b. In the second computing access packet, the SRv6 packet header is an outer header including an outer IP header and a Segment Routing Header (SRH). An IP header of the first computing access packet is an inner header. In the computing network, each of the routing nodes on the forwarding path S forwards the second computing access packet based on the SRv6 technology until the second gateway device receives the second computing access packet. In Figure 8b, R1 is the address of the next hop device of the first gateway device on the forwarding path S.

In some examples, in order to control computing access more accurately and ensure that the client obtains the required computing service, the second computing access packet can further carry an identify indicating the address of the target computing service, such as a CSID or a SID corresponding to the above-mentioned target computing service.

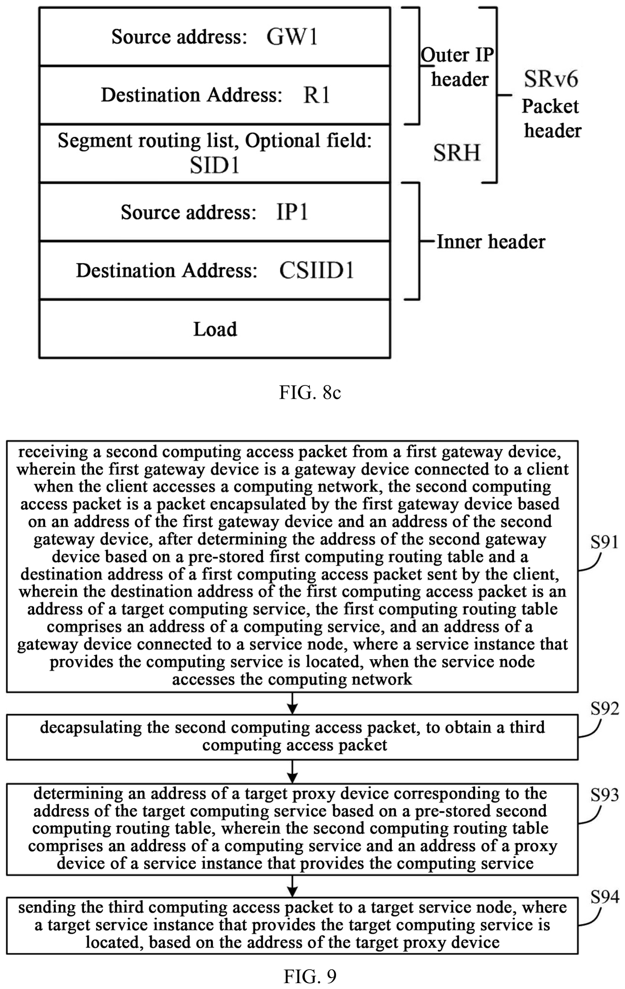

In the example of the present disclosure, the SRv6 packet header includes an SRH, and an optional field of the SRH is filled with an identify indicating the address of the target computing service, wherein the optional field of the SRH may be a Type Length Value (TLV) field. As shown in Figure 8c, the optional field of the SRH is filled with an SID1 corresponding to a CSID1.

In the example of the present disclosure, the identity indicating the address of the target computing service can also be filled at the end of the second computing access packet, or in other designated positions in the second computing access packet, which is not limited.

Based on the above computing access methods applied to the client and the first gateway device, examples of the present disclosure further provide a computing access method, as shown in Figure 9, which is applied to a second gateway device. The method includes the following blocks:
Block S91: a second computing access packet is received from a first gateway device, wherein the first gateway device is a gateway device connected to a client when the client accesses a computing network, the second computing access packet is a packet encapsulated by the first gateway device based on the address of the first gateway device and the address of the second gateway device, after determining the address of the second gateway device based on a pre-stored first computing routing table and the destination address of a first computing access packet sent by the client, wherein the destination address of the first computing access packet is the address of a target computing service, the first computing routing table includes the address of a computing service and the address of a gateway device connected to a service node, where a service instance that provides the computing service is located, when the service node accesses the computing network;
Block S92: the second computing access packet is decapsulated to obtain a third computing access packet;
Block S93: the address of the target proxy device corresponding to the address of the target computing service is determined based on the pre-stored second computing routing table, wherein the second computing routing table includes the address of a computing service and the address of a proxy device of an service instance that provides the computing service;
Block S94: based on the address of the target proxy device, the third computing access packet is sent to a target service node where the target service instance that provides the target computing service is located.

In the technical solution provided by the example of the present disclosure, an address is assigned for a computing service, a client constructs a computing access packet whose destination address is the address of a target computing service, and sends the computing access packet to a first gateway device in a computing network. The first gateway device and a second gateway device in the computing network respectively store a computing routing table containing the address of the computing service. The first gateway device and the second gateway device query the computing routing table based on the address of the target computing service carried in the computing access packet, and send the computing access packet to a target service node where a target service instance that provides the target computing service is located, realizing data plane forwarding and completing computing access.

In the above-mentioned block S91, regarding the process of obtaining the second computing access packet by the first gateway device, reference can be made to the relevant descriptions in the above-mentioned Figures 4 and 7, which will not be described again here.

After obtaining the second computing access packet, the first gateway device sends the second computing access packet to the second gateway device through other nodes in the computing network. The second gateway device receives the second computing access packet. Wherein, other nodes only need to support route forwarding and do not need to support the technical solution provided by the examples of the present disclosure.

In the above block S92, after receiving the second computing access packet, the second gateway device decapsulates the second computing access packet to obtain an inner packet of the second computing access packet, that is, a third computing access packet.

In some examples, the first gateway device encapsulates an SRv6 packet header in an outer layer of the first computing access packet, to obtain a second computing access packet, and the source address of the SRv6 packet header is the address of the first gateway device, the destination address of the SRv6 packet header is the address of the next hop device of the first gateway device on the path from the first gateway device to the second gateway device. In this case, based on SRv6 technology, the second computing access packet is forwarded in the computing network, and the destination address of the second computing access packet remains unchanged, when the second gateway device receives the second computing access packet which includes an SRv6 packet header and a load, the source address of the SRv6 packet header is the address of the first gateway device, the destination address of the SRv6 packet header is the address of the second gateway device, and the load is the first computing access packet.

At this time, the above block S92 may be: removing the SRv6 packet header of the second computing access packet, to obtain the first computing access packet which is the third computing access packet.

In some examples, the first computing routing table may further include the address of a service instance that provides a computing service; the second computing routing table may further include the address of the service instance that provides the computing service. The first gateway device encapsulates the SRv6 packet header in the outer layer of the first computing access packet, and modifies the destination address of the first computing access packet to the address of a target service instance, to obtain the second computing access packet, the source address of the SRv6 packet header is the address of the first gateway device, and the destination address of the SRv6 packet header is the address of the next hop device of the first gateway device on the path from the first gateway device to the second gateway device.

In this case, based on SRv6 technology, the second computing access packet is forwarded in the computing network, and the destination address of the second computing access packet remains unchanged, when the second gateway device receives the second computing access packet which includes an SRv6 packet header and a load, the source address of the SRv6 packet header is the address of the first gateway device, the destination address of the SRv6 packet header is the address of the second gateway device, and the load is a computing access packet obtained by modifying the destination address of the first computing access packet to the address of the target service instance, which is the third computing access packet;
at this time, the above block S92 may be: removing the SRv6 packet header of the second computing access packet, to obtain the third computing access packet.

In the above block S93, the target proxy device is the proxy device of the computing resource pool where the target service instance is located.

The second gateway device pre-stores a computing routing table, such as the above-mentioned second computing routing table. The second computing routing table can be pre-configured in the second gateway device.

In order to save network resources when accessing computing, the second computing routing table may further be generated by the second gateway device based on the information of the computing resource pool collected by the target proxy device. For example, before receiving the second computing access packet, the second gateway device receives the static attribute information and the dynamic attribute information of the target service instance collected by the target proxy device; and generates the second computing routing table based on the static attribute information and the dynamic attribute information.

In order to save table entry resources in the second gateway device, the second computing routing table can further be issued by the operation and maintenance platform when the client accesses computing. For example, before receiving the second computing access packet, the second gateway device receives the second computing routing table issued by the operation and maintenance platform in the computing network; and stores the second computing routing table. The second computing routing table in the operation and maintenance platform is generated based on the static attribute information and the dynamic attribute information of the target service instance reported by the second gateway device.

The second computing routing table can further be obtained in other ways, which is not limited.

In the example of the present disclosure, the second computing routing table includes the address of the computing service and the address of the proxy device of the service instance that provides the computing service. The second computing routing table may further include the address of the service instance that provides the computing service, the routing cost of accessing a service node where the service instance that provides the computing service is located, and the static attribute information of the service instance that provides the computing service. The structure of the second computing routing table can be seen in Table 3.

**Table 3**

| | | | | |
|---|---|---|---|---|
| SID | CSIID | Next hop | Routing cost | Attribute |

Wherein, the SID field is to be filled with the address of the computing service, or the SID indicating the address of the computing service; the CSIID field is to be filled with the address of the service instance; the next hop field is to be filled with the address of the proxy device; the routing cost field is to be filled with the routing cost of accessing the service node. The value of the routing cost can be obtained during the routing protocol announcement; the attribute field is to be filled with the network information such as static attribute information and dynamic attribute information of the service instance. The computing network information of the service instance may be obtained by the second gateway device from the proxy device of the service node.

In some examples, when the second computing access packet carries the address of the target service instance, for example, the destination address of the third computing access packet is the address of the target service instance, the above block S93 may be: determining the address of the target proxy device corresponding to the address of the target service instance based on the pre-stored second computing routing table.

In the example of the present disclosure, multiple service instances can provide the same computing service. One service instance provides one computing service. That is, the target service instance provides a target computing service, and the address of the target proxy device corresponding to the address of the target service instance is the address of the target proxy device corresponding to the address of the target computing service. The second gateway device can more accurately determine the address of the target proxy device based on the address of the target service instance, improving the accuracy of computing access.

In some examples, in order to further improve the accuracy of computing access, the second computing access packet may further carry a target identity indicating the address of the target computing service, such as the above-mentioned SID. In the example of the present disclosure, the SRv6 packet header includes an SRH, and an optional field of the SRH is filled with the target identity. The target identity can further be filled at the end of the second computing access packet, and can further be filled in other specified positions in the second computing access packet, which is not limited.

In this case, the second gateway device can further extract a target identity from the second computing access packet, and then determine the address of the target proxy device corresponding to the target identity and the address of the target service instance based on the pre-stored second computing routing table. The address of the target proxy device is determined in combination with multiple types of information, further improving the accuracy of computing access.

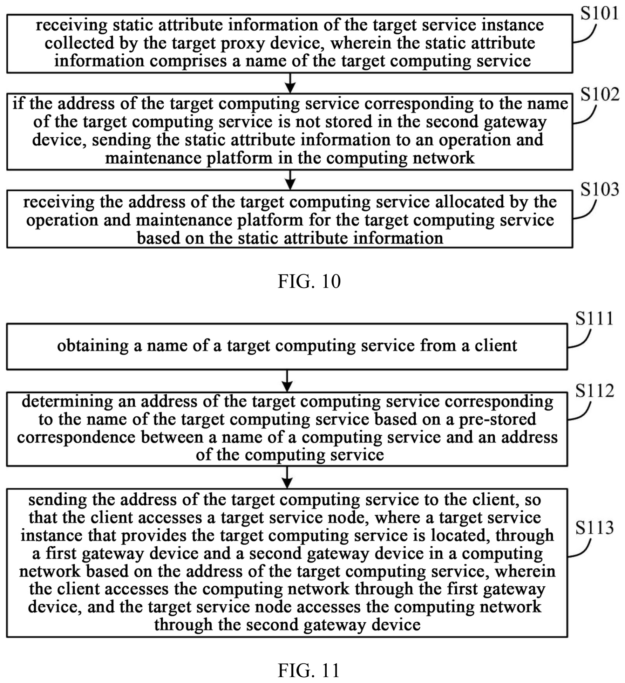

In some examples, an address allocation method for a computing service is further provided, as shown in Figure 10, which can include the following blocks.

Block S101: static attribute information of a target service instance collected by a target proxy device is received, wherein the static attribute information includes the name of a target computing service.

In the example of the present disclosure, the target proxy device can regularly collect the static attribute information of the target service instance, and when detecting changes in the static attribute information of the target service instance, send the static attribute information to a second gateway device. The target proxy device may further collect the static attribute information of the target service instance when obtaining a notification event reported in information, and send the static attribute information to the second gateway device. The target proxy device can further collect the static attribute information of the target service instance in other ways, which is not limited.

Block S102: if the address of the target computing service corresponding to the name of the target computing service is not stored in the second gateway device, the static attribute information is sent to an operation and maintenance platform of a computing network.

In the example of the present disclosure, the second gateway device maintains a correspondence between the name of the computing service and the address of the computing service. After obtaining the static attribute information of the target service instance, combining with the maintained correspondence, the second gateway device determines whether the address of the target computing service is stored in the second gateway device based on the name of the target computing service included in the static attribute information.

If the address of the target computing service is stored, it means that the operation and maintenance platform has allocated an address for the target computing service, the second gateway device ends the address allocation process and executes subsequent operations, such as send a routing protocol announcement to the first gateway device, the routing protocol announcement includes static attribute information and dynamic attribute information of the target service instance, so that the first gateway device generates a first computing routing table.

If the address of the target computing service is not stored, it means that the operation and maintenance platform has not allocated an address for the target computing service. At this time, the second gateway device can send the static attribute information of the target service instance to the operation and maintenance platform.

Block S103: the address of the target computing service allocated by the operation and maintenance platform for the target computing service based on the static attribute information is received.

Based on the static attribute information of the target service instance, the operation and maintenance platform can obtain the name, service type and other information of the target computing service, and then allocate an address for the target computing service, that is, CSID of the target computing service. The operation and maintenance platform feeds the address of the target computing service back to the second gateway device, and the second gateway device records and maintains the correspondence between the name of the target computing service and the address of the target computing service.

In addition, after obtaining the address of the target computing service, the second gateway device can execute subsequent operations, such as send a routing protocol announcement to the first gateway device, the routing protocol announcement includes static attribute information and dynamic attribute information of the target service instance, so that the first gateway device generates a first computing routing table.

Through the example shown in Figure 10, the address allocation is completed for the target computing service, ensuring subsequent computing access based on the address of the target computing service. In addition, the second gateway device maintains the correspondence between the name of a computing service and the address of the computing service. For the computing service for which an address that has been allocated, the second gateway device no longer requests the operation and maintenance platform to allocate an address for this computing service, saving network resources and computing resources of the operation and maintenance platform.

In addition, the operation and maintenance platform allocates an address for a computing service and collects static attribute information of a service instance to facilitate the generation of a first computing routing table and a second computing routing table, and then configure the first gateway device and the second gateway device to facilitate the achievement of computing access.

Based on the above computing access method applied to a client, a first gateway device and a second gateway device, an example of the present disclosure further provides a computing access method, as shown in Figure 11, which is applied to an operation and maintenance platform. The method includes the following blocks:
Block S111: the name of a target computing service is obtained from a client;
Block S112: the address of the target computing service corresponding to the name of the target computing service is determined based on a pre-stored correspondence between the name of a computing service and the address of the computing service;
Block S113: the address of the target computing service is sent to the client, so that the client accesses a target service node, where a target service instance that provides the target computing service is located, through a first gateway device and a second gateway device in a computing network based on the address of the target computing service, wherein the client accesses the computing network through the first gateway device, and the target service node accesses the computing network through the second gateway device.

In the technical solution provided by the example of the present disclosure, an address is allocated for a computing service, a client constructs a computing access packet whose destination address is the address of a target computing service, and sends the computing access packet to a first gateway device in a computing network. The first gateway device and a second gateway device in the computing network respectively store a computing routing table containing the address of the computing service. The first gateway device and the second gateway device query the computing routing table based on the address of the target computing service carried in the computing access packet, and send the computing access packet to a target service node, where a target service instance that provides the target computing service is located, realizing data plane forwarding and completing computing access.

In block S111, the client can be directly connected to the operation and maintenance platform. When accessing computing, the client sends the name of the target computing service to the operation and maintenance platform.

The client can further be connected to the operation and maintenance platform through a DNS server. When accessing computing, the client can send a domain name resolution request to the DNS server, the domain name included in the domain name resolution request is the name of the target computing service. The DNS server extracts the name of the target computing service from the domain name resolution request, and sends the extracted name of the target computing service to the operation and maintenance platform.

In block S112, the operation and maintenance platform maintains the correspondence between the name of a computing service and the address of the computing service. After obtaining the name of the target computing service, the operation and maintenance platform can query the correspondence between the name of a computing service and the address of the computing service, and obtain the address of the computing service corresponding to the name of the target computing service, that is, the address of the target computing service.

In the example of the present disclosure, the correspondence between the name of the computing service and the address of the computing service maintained by the operation and maintenance platform can be determined based on the static attribute information reported by the second gateway device. For example, before obtaining the name of the target computing service from the client, the operation and maintenance platform obtains the static attribute information of the target service instance from the second gateway device, wherein the static attribute information includes the name of the target computing service; based on the static attribute information, allocates the address of the target computing service for the target computing service; and sends the address of the target computing service to the second gateway device. At this time, the operation and maintenance platform obtains the correspondence between the name of the target computing service and the address of the target computing service. Subsequently, when the operation and maintenance platform obtains the static attribute information including the name of the target computing service reported by other gateway devices again, it can directly issue the address of the target computing service to other gateway devices based on the above correspondence. Here, regarding the address allocation process of the computing service, reference can be made to the above relevant description in Figure 10.

In block S113, the operation and maintenance platform sends the obtained address of the target computing service to the client. Then, the client accesses the target service instance through the first gateway device and the second gateway device. For the specific access process, reference can be made to the above relevant descriptions in Figure 4, 7 and 9.

In some examples, in order to ensure the realization of computing access, the operation and maintenance platform can maintain a correspondence between the address of a computing service and the address of a service instance that provides the computing service based on the computing network information reported by the second gateway device. After determining the address of the target computing service, based on the pre-stored correspondence between the address of the computing service and the address of the service instance, the operation and maintenance platform can determine the address of the target service instance corresponding to the address of the target computing service; and then based on the address of the target service instance, generates a second computing routing table from the second gateway device to the target service instance. The second computing routing table includes the address of the computing service and the address of a proxy device of the service instance that provides the computing service, etc.; sends the second computing routing table to the second gateway device.

In this way, the second gateway device does not need to generate the second computing routing table in advance, and only need to generate the second computing routing table when the second gateway device needs to access the target service instance, which saves the table entry resources of the second gateway device and also ensures the realization of computing access.

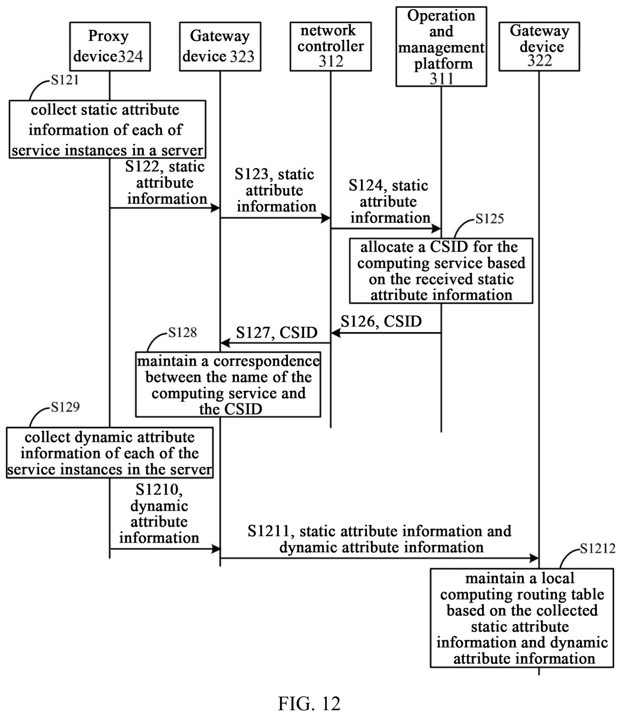

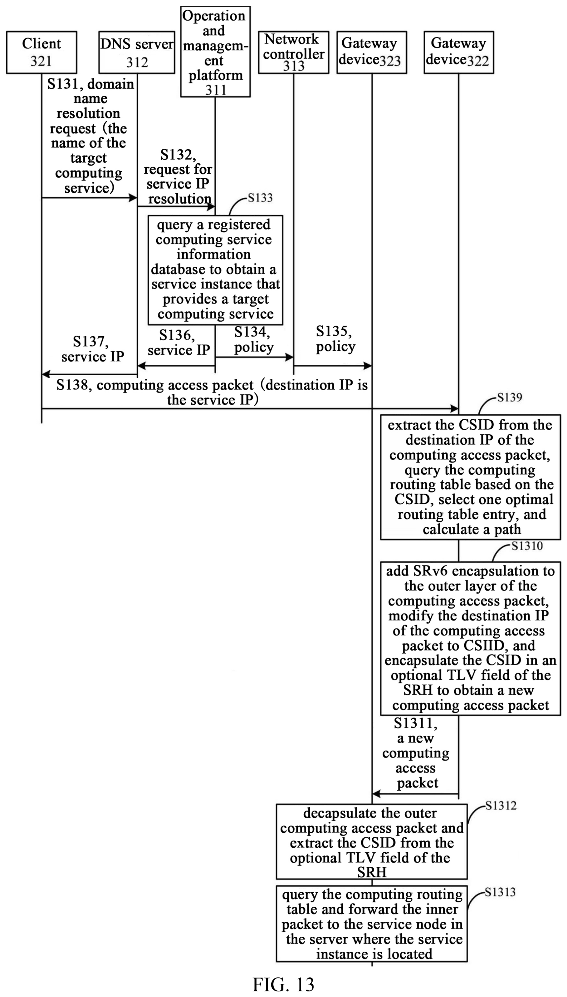

The computing access method provided by the example of the present disclosure will be described in detail below in conjunction with the computing access system shown in Figure 3 and computing access signaling diagrams shown in Figures 12 and 13.

A preparation phase for computing access is shown in Figure 12.

Block S121: a proxy device 324 collects static attribute information of each of service instances in a server 325.

Wherein, the static attribute information may include the address of a computing service, the name of the computing service, the service type of the computing service, the address of a service instance, the location of the service instance, the priority of the service instance and the capability of the service instance, etc., in the server 325. The capability of the service instance can be encoding and decoding capability, image processing capability, etc.. The address (i.e., CSIID) of the service instance included in the static attribute information is the IP address of the service instance.

Block S122: the proxy device 324 announces the collected static attribute information to a gateway device 323.

Block S123: the gateway device 323 announces the received static attribute information to a network controller 313.

Block S124: the network controller 313 announces the received static attribute information to an operation and maintenance platform 311.

Block S125: the operation and maintenance platform 311 allocates a CSID for the computing service based on the received static attribute information.

Block S126: the operation and maintenance platform 311 returns the allocated CSID to the network controller 313.

Block S127: the network controller 313 returns the received CSID to the gateway device 323.

Block S128: the gateway device 323 maintains a correspondence between the name of the computing service and the CSID based on the received CSID.

Block S129: the proxy device 324 collects dynamic attribute information of each of the service instances in the server 325. The dynamic attribute information can include a load condition, a session condition, etc..

Block S1210: the proxy device 324 announces the collected dynamic attribute information to the gateway device 323.

Block S1211: the gateway device 323 announces the received static attribute information and dynamic attribute information to other gateway devices such as a gateway device 322 through a routing protocol. Wherein, the routing protocol can be Border gateway Protocol (BGP) or Address Resolution Protocol (ARP), etc..

Block S1212: the gateway device 322 maintains a local computing routing table, based on the collected static attribute information and dynamic attribute information.

Since each gateway device may be an exit gateway device (such as the second gateway) or an entrance gateway device (such as the first gateway), the local computing routing table of each gateway device may include the information in the first computing routing table and the information in the second computing routing table.

An execution phase of computing access is shown in Figure 13.

Block S131: the client 321 sends a domain name resolution request to the DNS server 312, the domain name carried in the domain name resolution request is the name of the target computing service.

Block S132: the DNS server 312 requests the operation and maintenance platform 311 for service IP resolution. Here, the service IP is the address CSID of the target computing service.

The DNS server 312 requests the operation and maintenance platform 311 for service IP resolution, that is, sends the name of the target computing service to the operation and maintenance platform 311.

Block S133: the operation and maintenance platform 311 queries a registered computing service information database to obtain a service instance that provides the target computing service. Here, the operation and maintenance platform 311 can also obtain the service IP, that is, the address CSID of the target computing service.

Block S134: the operation and maintenance platform 311 issues a policy corresponding to the service instance for the target computing service to a network controller 313. This policy includes a second computing routing table. After obtaining the service instance that provides the target computing service, the operation and maintenance platform 311 can obtain the policy corresponding to the service instance.

Block S135: the network controller 313 issues the received policy to the gateway device 323 where the service instance that provides the target computing service is located.

Block S136: the operation and maintenance platform 311 returns the service IP to the DNS server 312. The execution order of block S134 and block S136 is not limited in the example of the present disclosure.

Block S137: the DNS server 312 returns the service IP to the client 321.

Block S138: the client 321 sends a computing access packet to the gateway device 322, and the computing access packet is an IPv6 packet, and a destination IP is the service IP.

Block S139: after receiving the computing access packet, the gateway device 322 extracts the CSID (i.e., service IP) from the destination IP of the computing access packet, queries the computing routing table based on the CSID, selects one optimal routing table entry, and calculates a path from the gateway device 322 to the gateway device 323. Here, the gateway device 323 is a gateway device where the service instance indicated by the routing table entry is located.

For example, the gateway device 322 extracts the SID from the CSID and encapsulates the SID in an optional TLV field of the SRH. The gateway device 322 queries the computing routing table based on the extracted SID to obtain a routing table entry with the smallest routing cost. This routing table entry is the optimal routing table entry, and includes the CSIID and a next hop address (i.e., the address of the gateway device 323). According to the next hop address and the address of the gateway device 322 itself, the gateway device 322 can calculate an optimal SRv6 path from the gateway device 322 to the gateway device 323.

Block S1310: the gateway device 322 adds SRv6 encapsulation to the outer layer of the computing access packet, modifies the destination IP of the computing access packet to CSIID, and encapsulates the CSID in an optional TLV field of the SRH to obtain a new computing access packet.

For example, the gateway device 322 extracts the SID from the CSID and encapsulates the SID in the optional TLV field of the SRH.

Block S1311: the gateway device 322 sends a new computing access packet to the gateway device 323.

Block S1312: after receiving the computing access packet, the gateway device 323 decapsulates the outer computing access packet and extracts the CSID from the optional TLV field of the SRH.

The gateway device 323 decapsulates the SRv6 packet header (including the IP header and SRH) in the outer layer of the computing access packet, and can obtain the SID and an inner packet.

Block S1313: the gateway device 323 queries the computing routing table and forwards the inner packet to the service node in the server 325 where the service instance is located.

The gateway device 323 queries the computing routing table based on the SID obtained in block S1311 and the destination address CSIID of the inner packet, and can obtain the next hop address, that is, the address of the proxy device 324. Then, based on the address of the proxy device 324, the gateway device 323 sends the inner packet to the service node where the service instance in the server 325 is located, to complete the computing access.

The description of the above-mentioned portions in Figures 12-13 is relatively simple. Reference can be made to the relevant descriptions of the above-mentioned Figures 4-11 for details.

In the technical solution provided by the examples of the present disclosure, a hybrid forwarding mechanism is adopted, that is, an upper management and control layer and a lower device layer are coordinated to complete computing access. In addition, in the technical solution provided by the examples of the present disclosure, it is not necessary to modify a DNS mechanism, and the DNS mechanism can be directly used to complete computing access, which reduces the deployment cost of the computing network.

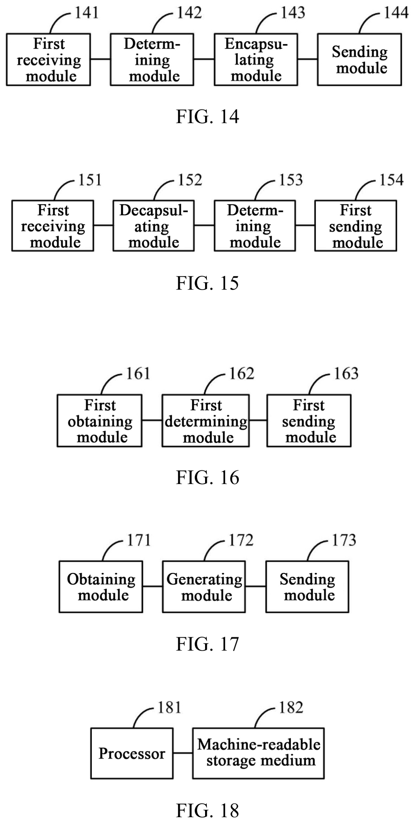

Corresponding to the above computing access methods, examples of the present disclosure further provide a computing access apparatus, as shown in Figure 14, which is applied to a first gateway device, the apparatus includes:
a first receiving module 141, to receive a first computing access packet sent by a client, wherein the client accesses a computing network through the first gateway device, and a destination address of the first computing access packet is an address of a target computing service;
a determining module 142, to determine an address of a second gateway device corresponding to the address of the target computing service based on a pre-stored first computing routing table, wherein the first computing routing table comprises an address of a computing service and an address of a gateway device connected to a service node, where a service instance that provides the computing service is located, when the service node accesses the computing network;
an encapsulating module 143, to encapsulate the first computing access packet based on an address of the first gateway device and the address of the second gateway device, to obtain a second computing access packet;
a sending module 144, to send the second computing access packet to the second gateway device.

In some examples, the first computing routing table further comprises a routing cost of accessing the service node where the service instance that provides the computing service is located;
the determining module 142 may be specifically to determine an address of a second gateway device corresponding to the address of the target computing service which corresponds to a smallest routing cost, based on the pre-stored first computing routing table.

In some examples, the encapsulating module 143 may be specifically to encapsulate an SRv6 packet header in an outer layer of the first computing access packet, to obtain the second computing access packet, wherein a source address of the SRv6 packet header is the address of the first gateway device, a destination address of the SRv6 packet header is an address of a next hop device of the first gateway device on a path from the first gateway device to the second gateway device.

In some examples, the first computing routing table further comprises an address of the service instance that provides the computing service;
the determining module 142 may be further to determine an address of a target service instance corresponding to the address of the target computing service based on the pre-stored first computing routing table;
the encapsulating module 143 may be specifically to encapsulate an SRv6 packet header in an outer layer of the first computing access packet, and modify the destination address of the first computing access packet to the address of the target service instance, to obtain the second computing access packet, wherein a source address of the SRv6 packet header is the address of the first gateway device, a destination address of the SRv6 packet header is an address of a next hop device of the first gateway device on a path from the first gateway device to the second gateway device.

In some examples, the SRv6 packet header includes an SRH, and an optional field of the SRH is filled with an identity indicating the address of the target computing service.

In some examples, the above-mentioned computing access apparatus may further include:
a second receiving module to: before receiving the first computing access packet sent by the client, receive a routing protocol announcement sent by the second gateway device, wherein the routing protocol announcement comprises static attribute information and dynamic attribute information of a target service instance that provides the target computing service;
a generating module, to generate the first computing routing table based on the static attribute information and the dynamic attribute information.

In some examples, the static attribute information may comprise one or more of: the address of the target computing service, a name of the target computing service, a service type of the target computing service, the address of the target service instance, a location of the target service instance, a priority of the target service instance, and a capability of the target service instance; or
the dynamic attribute information may comprise one or more of a load status and a session status of the target service instance.

In some examples, the address of the computing service consists of a preset address prefix and an identity of the computing service;
the address of the computing service comprised in the first computing routing table is represented by the identity of the computing service.

In some examples, the address of the computing service and an address of the service instance are respectively in a same form as an IP address.

In the technical solution provided by the example of the present disclosure, an address is assigned for a computing service, a client constructs a computing access packet whose destination address is the address of a target computing service, and sends the computing access packet to a first gateway device in a computing network. The first gateway device and a second gateway device in the computing network respectively store a computing routing table containing the address of the computing service. The first gateway device and the second gateway device query the computing routing table based on the address of the target computing service carried in the computing access packet, and send the computing access packet to a target service node where a target service instance that provides the target computing service is located, realizing data plane forwarding and completing computing access.

Corresponding to the above computing access method, examples of the present disclosure further provide a computing access apparatus, as shown in Figure 15, which is applied to a second gateway device, the apparatus includes:
a first receiving module 151, to receive a second computing access packet from a first gateway device, wherein the first gateway device is a gateway device connected to a client when the client accesses a computing network, the second computing access packet is a packet encapsulated by the first gateway device based on an address of the first gateway device and an address of the second gateway device, after determining the address of the second gateway device based on a pre-stored first computing routing table and a destination address of a first computing access packet sent by the client, wherein the destination address of the first computing access packet is an address of a target computing service, the first computing routing table comprises an address of a computing service, and an address of a gateway device connected to a service node, where a service instance that provides the computing service is located, when the service node accesses the computing network;
a decapsulating module 152, to decapsulate the second computing access packet, to obtain a third computing access packet;
a determining module 153, to determine an address of a target proxy device corresponding to the address of the target computing service based on a pre-stored second computing routing table, wherein the second computing routing table comprises an address of a computing service and an address of a proxy device of a service instance that provides the computing service;
a first sending module 154, to send the third computing access packet to a service node, where a target service instance that provides the target computing service is located, based on the address of the target proxy device.

In some examples, the second computing access packet includes an SRv6 packet header and a load, and a source address of the SRv6 packet header is the address of the first gateway device, a destination address of the SRv6 packet header is the address of the second gateway device, and the load is the first computing access packet;
the decapsulating module 152 may be specifically to remove the SRv6 packet header of the second computing access packet, to obtain the first computing access packet which is the third computing access packet.

In some examples, the first computing routing table may further comprise an address of the service instance that provides the computing service; the second computing routing table may further comprise the address of the service instance that provides the computing service;
the second computing access packet may comprise an SRv6 packet header and a load, a source address of the SRv6 packet header is the address of the first gateway device, a destination address of the SRv6 packet header is the address of the second gateway device, and the load is the third computing access packet obtained by modifying the destination address of the first computing access packet to an address of the target service instance;
the decapsulating module 152 may be specifically to remove the SRv6 packet header of the second computing access packet, to obtain the third computing access packet;
the determining module 153 may be specifically to determine the address of the target proxy device corresponding to the address of the target service instance based on the pre-stored second computing routing table.

In some examples, the SRv6 packet header includes an SRH, and an optional field of the SRH is filled with a target identity indicating the address of the target computing service;
the determining module is specifically to determine the address of the target proxy device corresponding to the target identity and the address of the target service instance based on the pre-stored second computing routing table.

In some examples, the above-mentioned computing access apparatus may further include:
a second receiving module to: before receiving the second computing access packet, receive the second computing routing table issued by an operation and maintenance platform in the computing network;
a storage module, to store the second computing routing table.

In some examples, the above-mentioned computing access apparatus may further include:
a third receiving module to: before receiving the second computing access packet, receive static attribute information and dynamic attribute information of the target service instance collected by the target proxy device;
a generating module, to generate the second computing routing table based on the static attribute information and the dynamic attribute information.

In some examples, the dynamic attribute information may comprise one or more of a load status and a session status of the target service instance.

In some examples, the above-mentioned computing access apparatus may further include:
a fourth receiving module to: before receiving the second computing access packet, receive static attribute information of the target service instance collected by the target proxy device, wherein the static attribute information comprises a name of the target computing service;
a second sending module to: if the address of the target computing service corresponding to the name of the target computing service is not stored in the second gateway device, send the static attribute information to an operation and maintenance platform in the computing network;
a fifth receiving module to: receive the address of the target computing service allocated by the operation and maintenance platform for the target computing service based on the static attribute information.

In some examples, the above-mentioned computing access apparatus may further include:
a third sending module to: after obtaining the address of the target computing service, send a routing protocol announcement to the first gateway device, wherein the routing protocol announcement comprises the static attribute information and dynamic attribute information of the target service instance.

In some examples, the static attribute information may comprise one or more of: the address of the target computing service, a name of the target computing service, a service type of the target computing service, an address of the target service instance, a location of the target service instance, a priority of the target service instance, and a capability of the target service instance.

In some examples, the address of the computing service consists of a preset address prefix and an identity of the computing service;
an address of each computing service comprised in the first computing routing table and the second computing routing table is represented by the identity of the computing service.

In some examples, the address of the computing service and the address of the service instance are respectively in a same form as an IP address.

In the technical solution provided by the example of the present disclosure, an address is assigned for a computing service, a client constructs a computing access packet whose destination address is the address of a target computing service, and sends the computing access packet to a first gateway device in a computing network. The first gateway device and a second gateway device in the computing network respectively store a computing routing table containing the address of the computing service. The first gateway device and the second gateway device query the computing routing table based on the address of the target computing service carried in the computing access packet, and send the computing access packet to a service node where a target service instance that provides the target computing service is located, realizing data plane forwarding and completing computing access.

Corresponding to the above computing access method, examples of the present disclosure further provide a computing access apparatus, as shown in Figure 16, which is applied to an operation and maintenance platform, the apparatus includes:
a first obtaining module 161, to obtain a name of a target computing service from a client;
a first determining module 162, to determine an address of the target computing service corresponding to the name of the target computing service based on a pre-stored correspondence between a name of a computing service and an address of the computing service;
a first sending module 163, to send the address of the target computing service to the client, so that the client accesses a target service node, where a target service instance that provides the target computing service is located, through a first gateway device and a second gateway device in a computing network based on the address of the target computing service, wherein the client accesses the computing network through the first gateway device, and the target service node accesses the computing network through the second gateway device.

In some examples, the first obtaining module 161 may be specifically to receive the name of the target computing service sent by a DNS server, wherein the name of the target computing service is a domain name extracted by the DNS server from a domain name resolution request sent by the client.

In some examples, the above-mentioned computing access apparatus may further include:
a second determining module to: after determining the address of the target computing service, determine an address of the target service instance corresponding to the address of the target computing service based on a pre-stored correspondence between an address of a computing service and an address of a service instance that provides the computing service;
a generating module, to generate a second computing routing table from the second gateway device to the target service node based on the address of the target service instance, wherein the second computing routing table comprises an address of a computing service and an address of a proxy device of a service instance that provides the computing service;
a second sending module, to send the second computing routing table to the second gateway device.

In some examples, the above-mentioned computing access apparatus may further include:
a second obtaining module to: before obtaining the name of the target computing service from the client, obtain static attribute information of the target service instance from the second gateway device, wherein the static attribute information comprises the name of the target computing service;
an allocation module, to allocate the address of the target computing service for the target computing service based on the static attribute information;
a third sending module, to send the address of the target computing service to the second gateway device.

In some examples, the static attribute information may further include one or more of: the address of the target computing service, a service type of the target computing service, an address of the target service instance, a location of the target service instance, a priority of the target service instance, and a capability of the target service instance.

In some examples, the address of the computing service and the address of the service instance are respectively in a same form as an IP address.

In the technical solution provided by the example of the present disclosure, an address is assigned for a computing service, a client constructs a computing access packet whose destination address is the address of a target computing service, and sends the computing access packet to a first gateway device in a computing network. The first gateway device and a second gateway device in the computing network respectively store a computing routing table containing the address of the computing service. The first gateway device and the second gateway device query the computing routing table based on the address of the target computing service carried in the computing access packet, and send the computing access packet to a target service node where a target service instance that provides the target computing service is located, realizing data plane forwarding and completing computing access.

Corresponding to the above computing access method, examples of the present disclosure further provide a computing access apparatus, as shown in Figure 17, which is applied to a client that accesses a computing network through a first gateway device, the apparatus includes:
an obtaining module 171, to obtain an address of a target computing service;
a generating module 172, to generate a first computing access packet whose destination address is the address of the target computing service ;
a sending module 173, to send the first computing access packet to the first gateway device, wherein the client accesses the computing network through the first gateway device, so that the first gateway device sends the first computing access packet through the second gateway device to a target service node, where a target service instance that provides the target computing service is located, and the target service node accesses the computing network through the second gateway device.

In some examples, the obtaining module 171 may be specifically to:
send a domain name resolution request to a DNS server, wherein a domain name comprised in the domain name resolution request is a name of the target computing service;
receive the address of the target computing service corresponding to the name of the target computing service fed back by the DNS server.

In some examples, the address of the target computing service consists of a preset address prefix and an identity of the target computing service;
in computing routing tables stored in the first gateway device and the second gateway device, the address of the target computing service is represented by the identity of the target computing service.

In some examples, the address of the target computing service and an address of the target service instance are respectively in a same form as an IP address.

In the technical solution provided by the example of the present disclosure, an address is assigned for a computing service, a client constructs a computing access packet whose destination address is the address of a target computing service, and sends the computing access packet to a first gateway device in a computing network. The first gateway device and a second gateway device in the computing network respectively store a computing routing table containing the address of the computing service. The first gateway device and the second gateway device query the computing routing table based on the address of the target computing service carried in the computing access packet, and send the computing access packet to a target service node where a target service instance that provides the target computing service is located, realizing data plane forwarding and completing computing access.

Corresponding to the above computing access method, an example of the present disclosure further provides a network device, as shown in Figure 18, which includes a processor 181 and a machine-readable storage medium 182, wherein the machine-readable storage medium 182 stores machine-executable instructions thereon, which can be executed by the processor 181, to cause the processor 181 to carry out any one of the computing access methods applied to a first gateway device, or carry out any one of the computing access methods applied to a second gateway device, or carry out any one of the computing access methods applied to an operation and maintenance platform, or carry out any one of the computing access methods applied to a client.

The machine-readable storage medium may include a Random Access Memory (RAM) or a Non-Volatile Memory (NVM), such as at least one disk memory. Optionally, the machine-readable storage medium may also be at least one storage device located remotely from the aforementioned processor.

The processor can be a general-purpose processor, including a Central Processing Unit (CPU), a Network Processor (NP), etc.; it can also be a Digital Signal Processor (DSP), an Application Specific Integrated Circuit (ASIC), a Field-Programmable Gate Array (FPGA) or other programmable logic devices, discrete gate or transistor logic devices, and discrete hardware components.

In yet another example provided by the present disclosure, a computer-readable storage medium is further provided, which stores a computer program thereon, wherein the computer program, when executed by a processor, carries out any one of the computing access methods applied to a first gateway device, or carries out any one of the computing access methods applied to a second gateway device, or carries out any one of the computing access methods applied to an operation and maintenance platform, or carries out any one of the computing access methods applied to a client.

In yet another example provided by the present disclosure, a computer program product containing instructions is further provided, which when running on a computer, causes the computer to carry out any one of the computing access methods applied to a first gateway device, or carry out any one of the computing access methods applied to a second gateway device, or carry out any one of the computing access methods applied to an operation and maintenance platform, or carry out any one of the computing access methods applied to a client.

In the above examples, it may be achieved in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as a DVD), or semiconductor media (such as a Solid State Disk (SSD)) and the like.

It should be noted that, relational terms here such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or device. Without further limitation, elements defined by the phrase "comprising one..." do not preclude the presence of additional identical elements in a process, method, article or device that includes the mentioned elements.

The various examples in this specification are described in a related manner. Each example focuses on the differences from other examples, and the same and similar parts between the various examples can be referred to each other. Especially, for the examples of the apparatus, network device, storage medium and program product, the description is relatively simple because it is basically similar to the example of the method, and the relevant points can be referred to the partial description of the example of the method.

The above descriptions are only preferred examples of the present disclosure, and are not intended to limit the present disclosure. Any modifications, equivalent replacements, improvements and the like made within the spirit and principles of the present disclosure shall be included within the scope of protection of the present disclosure.

## Claims

1. A computing access method, which is applied to a first gateway device, wherein the method comprises:
receiving a first computing access packet sent by a client, wherein the client accesses a computing network through the first gateway device, and a destination address of the first computing access packet is an address of a target computing service;
determining an address of a second gateway device corresponding to the address of the target computing service based on a pre-stored first computing routing table, wherein the first computing routing table comprises an address of a computing service and an address of a gateway device connected to a service node, where a service instance that provides the computing service is located, when the service node accesses the computing network;
encapsulating the first computing access packet based on an address of the first gateway device and the address of the second gateway device, to obtain a second computing access packet;
sending the second computing access packet to the second gateway device.

2. The method according to claim 1, wherein the first computing routing table further comprises a routing cost of accessing the service node where the service instance that provides the computing service is located;
wherein determining the address of the second gateway device corresponding to the address of the target computing service based on the pre-stored first computing routing table, comprises:
determining an address of a second gateway device corresponding to the address of the target computing service which corresponds to a smallest routing cost, based on the pre-stored first computing routing table.

3. The method according to claim 1, wherein encapsulating the first computing access packet based on the address of the first gateway device and the address of the second gateway device, to obtain the second computing access packet, comprises:
encapsulating a segment routing over Internet Protocol Version 6, SRv6, packet header in an outer layer of the first computing access packet, to obtain the second computing access packet, wherein a source address of the SRv6 packet header is the address of the first gateway device, a destination address of the SRv6 packet header is an address of a next hop device of the first gateway device on a path from the first gateway device to the second gateway device.

4. The method according to claim 1, wherein the first computing routing table further comprises an address of the service instance that provides the computing service; the method further comprises:
determining an address of a target service instance corresponding to the address of the target computing service based on the pre-stored first computing routing table;
wherein encapsulating the first computing access packet based on the address of the first gateway device and the address of the second gateway device, to obtain the second computing access packet, comprises:
encapsulating an SRv6 packet header in an outer layer of the first computing access packet, and modifying the destination address of the first computing access packet to the address of the target service instance, to obtain the second computing access packet, wherein a source address of the SRv6 packet header is the address of the first gateway device, a destination address of the SRv6 packet header is an address of a next hop device of the first gateway device on a path from the first gateway device to the second gateway device.

5. The method according to claim 4, wherein the SRv6 packet header comprises a segment routing header SRH, and an optional field of the SRH is filled with an identity indicating the address of the target computing service.

6. The method according to claim 1, wherein before receiving the first computing access packet sent by the client, the method further comprises:
receiving a routing protocol announcement sent by the second gateway device, wherein the routing protocol announcement comprises static attribute information and dynamic attribute information of a target service instance that provides the target computing service;
generating the first computing routing table based on the static attribute information and the dynamic attribute information.

7. The method according to claim 6, wherein the static attribute information comprises one or more of: the address of the target computing service, a name of the target computing service, a service type of the target computing service, the address of the target service instance, a location of the target service instance, a priority of the target service instance, and a capability of the target service instance; or
the dynamic attribute information comprises one or more of a load status and a session status of the target service instance.

8. The method according to any one of claims 1 to 7, wherein the address of the computing service consists of a preset address prefix and an identity of the computing service;
the address of the computing service comprised in the first computing routing table is represented by the identity of the computing service.

9. The method according to any one of claims 1 to 7, wherein the address of the computing service and an address of the service instance are respectively in a same form as an Internet Protocol, IP, address.

10. A computing access method, which is applied to a second gateway device, wherein the method comprises:
receiving a second computing access packet from a first gateway device, wherein the first gateway device is a gateway device connected to a client when the client accesses a computing network, the second computing access packet is a packet encapsulated by the first gateway device based on an address of the first gateway device and an address of the second gateway device, after determining the address of the second gateway device based on a pre-stored first computing routing table and a destination address of a first computing access packet sent by the client, wherein the destination address of the first computing access packet is an address of a target computing service, the first computing routing table comprises an address of a computing service, and an address of a gateway device connected to a service node, where a service instance that provides the computing service is located, when the service node accesses the computing network;
decapsulating the second computing access packet, to obtain a third computing access packet;
determining an address of a target proxy device corresponding to the address of the target computing service based on a pre-stored second computing routing table, wherein the second computing routing table comprises an address of a computing service and an address of a proxy device of a service instance that provides the computing service;
sending the third computing access packet to a target service node, where a target service instance that provides the target computing service is located, based on the address of the target proxy device.

11. The method according to claim 10, wherein the second computing access packet comprises a segment routing over Internet Protocol Version 6, SRv6, packet header and a load, and a source address of the SRv6 packet header is the address of the first gateway device, a destination address of the SRv6 packet header is the address of the second gateway device, and the load is the first computing access packet;
wherein decapsulating the second computing access packet, to obtain the third computing access packet, comprises:
removing the SRv6 packet header of the second computing access packet, to obtain the first computing access packet which is the third computing access packet.

12. The method according to claim 10, wherein the first computing routing table further comprises an address of the service instance that provides the computing service; the second computing routing table further comprises the address of the service instance that provides the computing service;
the second computing access packet comprises an SRv6 packet header and a load, a source address of the SRv6 packet header is the address of the first gateway device, a destination address of the SRv6 packet header is the address of the second gateway device, and the load is the third computing access packet obtained by modifying the destination address of the first computing access packet to an address of the target service instance;
wherein decapsulating the second computing access packet, to obtain the third computing access packet, comprises:
removing the SRv6 packet header of the second computing access packet, to obtain the third computing access packet;
wherein determining the address of the target proxy device corresponding to the address of the target computing service based on the pre-stored second computing routing table, comprises:
determining the address of the target proxy device corresponding to the address of the target service instance based on the pre-stored second computing routing table.

13. The method according to claim 12, wherein the SRv6 packet header comprises a segment routing header SRH, and an optional field of the SRH is filled with a target identity indicating the address of the target computing service;
wherein determining the address of the target proxy device corresponding to the address of the target computing service based on the pre-stored second computing routing table, comprises:
determining the address of the target proxy device corresponding to the target identity and the address of the target service instance based on the pre-stored second computing routing table.

14. The method according to claim 10, wherein, before receiving the second computing access packet, the method further comprises:
receiving the second computing routing table issued by an operation and maintenance platform in the computing network;
storing the second computing routing table.

15. The method according to claim 10, wherein before receiving the second computing access packet, the method further comprises:
receiving static attribute information and dynamic attribute information of the target service instance collected by the target proxy device;
generating the second computing routing table based on the static attribute information and the dynamic attribute information.

16. The method according to claim 15, wherein the dynamic attribute information comprises one or more of a load status and a session status of the target service instance.

17. The method according to claim 10, wherein before receiving the second computing access packet, the method further comprises:
receiving static attribute information of the target service instance collected by the target proxy device, wherein the static attribute information comprises a name of the target computing service;
if the address of the target computing service corresponding to the name of the target computing service is not stored in the second gateway device, sending the static attribute information to an operation and maintenance platform in the computing network;
receiving the address of the target computing service allocated by the operation and maintenance platform for the target computing service based on the static attribute information.

18. The method according to claim 17, wherein after obtaining the address of the target computing service, the method further comprises:
sending a routing protocol announcement to the first gateway device, wherein the routing protocol announcement comprises the static attribute information and dynamic attribute information of the target service instance.

19. The method according to any one of claims 15 to 18, wherein the static attribute information comprises one or more of: the address of the target computing service, a name of the target computing service, a service type of the target computing service, an address of the target service instance, a location of the target service instance, a priority of the target service instance, and a capability of the target service instance.

20. The method according to any one of claims 10 to 18, wherein the address of the computing service consists of a preset address prefix and an identity of the computing service;
an address of each computing service comprised in the first computing routing table and the second computing routing table is represented by the identity of the computing service.

21. The method according to any one of claims 10 to 18, wherein the address of the computing service and the address of the service instance are respectively in a same form as an Internet Protocol, IP, address.

22. A computing access method, which is applied to an operation and maintenance platform, wherein the method comprises:
obtaining a name of a target computing service from a client;
determining an address of the target computing service corresponding to the name of the target computing service based on a pre-stored correspondence between a name of a computing service and an address of the computing service;
sending the address of the target computing service to the client, so that the client accesses a target service node, where a target service instance that provides the target computing service is located, through a first gateway device and a second gateway device in a computing network based on the address of the target computing service, wherein the client accesses the computing network through the first gateway device, and the target service node accesses the computing network through the second gateway device.

23. The method according to claim 22, wherein obtaining the name of the target computing service from the client, comprises:
receiving the name of the target computing service sent by a domain name system, DNS, server, wherein the name of the target computing service is a domain name extracted by the DNS server from a domain name resolution request sent by the client.

24. The method according to claim 22, wherein after determining the address of the target computing service, the method further comprises:
determining an address of the target service instance corresponding to the address of the target computing service based on a pre-stored correspondence between an address of a computing service and an address of a service instance that provides the computing service;
generating a second computing routing table from the second gateway device to the target service node based on the address of the target service instance, wherein the second computing routing table comprises an address of a computing service and an address of a proxy device of a service instance that provides the computing service;
sending the second computing routing table to the second gateway device.

25. The method according to claim 22, wherein before obtaining the name of the target computing service from the client, the method further comprises:
obtaining static attribute information of the target service instance from the second gateway device, wherein the static attribute information comprises the name of the target computing service;
allocating the address of the target computing service for the target computing service based on the static attribute information;
sending the address of the target computing service to the second gateway device.

26. The method according to claim 25, wherein the static attribute information further comprises one or more of: the address of the target computing service, a service type of the target computing service, an address of the target service instance, a location of the target service instance, a priority of the target service instance, and a capability of the target service instance.

27. The method according to any one of claims 22 to 26, wherein the address of the computing service and the address of the service instance are respectively in a same form as an Internet Protocol, IP, address.

28. A computing access method, which is applied to a client that accesses a computing network through a first gateway device, wherein the method comprises:
obtaining an address of a target computing service;
generating a first computing access packet whose destination address is the address of the target computing service;
sending the first computing access packet to the first gateway device, wherein the client accesses the computing network through the first gateway device, so that the first gateway device sends the first computing access packet through the second gateway device to a target service node, where a target service instance that provides the target computing service is located, and the target service node accesses the computing network through the second gateway device.

29. The method according to claim 28, wherein obtaining the address of the target computing service, comprises:
sending a domain name resolution request to a domain name system, DNS, server, wherein a domain name comprised in the domain name resolution request is a name of the target computing service;
receiving the address of the target computing service corresponding to the name of the target computing service fed back by the DNS server.

30. The method according to claim 28 or 29, wherein the address of the target computing service consists of a preset address prefix and an identity of the target computing service;
in computing routing tables stored in the first gateway device and the second gateway device, the address of the target computing service is represented by the identity of the target computing service.

31. The method according to claim 28 or 29, wherein the address of the target computing service and an address of the target service instance are respectively in a same form as an Internet Protocol, IP, address.

32. A computing access apparatus, which is applied to a first gateway device, wherein the apparatus comprises:
a first receiving module, to receive a first computing access packet sent by a client, wherein the client accesses a computing network through the first gateway device, and a destination address of the first computing access packet is an address of a target computing service;
a determining module, to determine an address of a second gateway device corresponding to the address of the target computing service based on a pre-stored first computing routing table, wherein the first computing routing table comprises an address of a computing service and an address of a gateway device connected to a service node, where a service instance that provides the computing service is located, when the service node accesses the computing network;
an encapsulating module, to encapsulate the first computing access packet based on an address of the first gateway device and the address of the second gateway device, to obtain a second computing access packet;
a sending module, to send the second computing access packet to the second gateway device.

33. The apparatus according to claim 32, wherein the first computing routing table further comprises a routing cost of accessing the service node where the service instance that provides the computing service is located;
the determining module is specifically to determine an address of a second gateway device corresponding to the address of the target computing service which corresponds to a smallest routing cost, based on the pre-stored first computing routing table.

34. The apparatus according to claim 32, wherein the encapsulating module is specifically to encapsulate a segment routing over Internet Protocol Version 6, SRv6, packet header in an outer layer of the first computing access packet, to obtain the second computing access packet, wherein a source address of the SRv6 packet header is the address of the first gateway device, a destination address of the SRv6 packet header is an address of a next hop device of the first gateway device on a path from the first gateway device to the second gateway device.

35. The apparatus according to claim 32, wherein the first computing routing table further comprises an address of the service instance that provides the computing service;
the determining module is further to determine an address of a target service instance corresponding to the address of the target computing service based on the pre-stored first computing routing table;
the encapsulating module is specifically to encapsulate an SRv6 packet header in an outer layer of the first computing access packet, and modify the destination address of the first computing access packet to the address of the target service instance, to obtain the second computing access packet, wherein a source address of the SRv6 packet header is the address of the first gateway device, a destination address of the SRv6 packet header is an address of a next hop device of the first gateway device on a path from the first gateway device to the second gateway device.

36. The apparatus according to claim 35, wherein the SRv6 packet header comprises a segment routing header SRH, and an optional field of the SRH is filled with an identity indicating the address of the target computing service.

37. The apparatus according to claim 32, further comprising:
a second receiving module to: before receiving the first computing access packet sent by the client, receive a routing protocol announcement sent by the second gateway device, wherein the routing protocol announcement comprises static attribute information and dynamic attribute information of a target service instance that provides the target computing service;
a generating module, to generate the first computing routing table based on the static attribute information and the dynamic attribute information.

38. The apparatus according to claim 37, wherein the static attribute information comprises one or more of: the address of the target computing service, a name of the target computing service, a service type of the target computing service, the address of the target service instance, a location of the target service instance, a priority of the target service instance, and a capability of the target service instance; or
the dynamic attribute information comprises one or more of a load status and a session status of the target service instance.

39. The apparatus according to any one of claims 32 to 38, wherein the address of the computing service consists of a preset address prefix and an identity of the computing service;
the address of the computing service comprised in the first computing routing table is represented by the identity of the computing service.

40. The apparatus according to any one of claims 32 to 38, wherein the address of the computing service and an address of the service instance are respectively in a same form as an Internet Protocol, IP, address.

41. A computing access apparatus, which is applied to a second gateway device, wherein the apparatus comprises:
a first receiving module, to receive a second computing access packet from a first gateway device, wherein the first gateway device is a gateway device connected to a client when the client accesses a computing network, the second computing access packet is a packet encapsulated by the first gateway device based on an address of the first gateway device and an address of the second gateway device, after determining the address of the second gateway device based on a pre-stored first computing routing table and a destination address of a first computing access packet sent by the client, wherein the destination address of the first computing access packet is an address of a target computing service, the first computing routing table comprises an address of a computing service, and an address of a gateway device connected to a service node, where a service instance that provides the computing service is located, when the service node accesses the computing network;
a decapsulating module, to decapsulate the second computing access packet, to obtain a third computing access packet;
a determining module, to determine an address of a target proxy device corresponding to the address of the target computing service based on a pre-stored second computing routing table, wherein the second computing routing table comprises an address of a computing service and an address of a proxy device of a service instance that provides the computing service;
a first sending module, to send the third computing access packet to a target service node, where a target service instance that provides the target computing service is located, based on the address of the target proxy device.

42. The apparatus according to claim 41, wherein the second computing access packet comprises a segment routing over Internet Protocol Version 6, SRv6, packet header and a load, and a source address of the SRv6 packet header is the address of the first gateway device, a destination address of the SRv6 packet header is the address of the second gateway device, and the load is the first computing access packet;
the decapsulating module is specifically to remove the SRv6 packet header of the second computing access packet, to obtain the first computing access packet which is the third computing access packet.

43. The apparatus according to claim 41, wherein the first computing routing table further comprises an address of the service instance that provides the computing service; the second computing routing table further comprises the address of the service instance that provides the computing service;
the second computing access packet comprises an SRv6 packet header and a load, a source address of the SRv6 packet header is the address of the first gateway device, a destination address of the SRv6 packet header is the address of the second gateway device, and the load is the third computing access packet obtained by modifying the destination address of the first computing access packet to an address of the target service instance;
the decapsulating module is specifically to remove the SRv6 packet header of the second computing access packet, to obtain the third computing access packet;
the determining module is specifically to determine the address of the target proxy device corresponding to the address of the target service instance based on the pre-stored second computing routing table.

44. The apparatus according to claim 43, wherein the SRv6 packet header comprises a segment routing header SRH, and an optional field of the SRH is filled with a target identity indicating the address of the target computing service;
the determining module is specifically to determine the address of the target proxy device corresponding to the target identity and the address of the target service instance based on the pre-stored second computing routing table.

45. The apparatus according to claim 41, further comprising:
a second receiving module to: before receiving the second computing access packet, receive the second computing routing table issued by an operation and maintenance platform in the computing network;
a storage module, to store the second computing routing table.

46. The apparatus according to claim 41, further comprising:
a third receiving module to: before receiving the second computing access packet, receive static attribute information and dynamic attribute information of the target service instance collected by the target proxy device;
a generating module, to generate the second computing routing table based on the static attribute information and the dynamic attribute information.

47. The apparatus according to claim 46, wherein the dynamic attribute information comprises one or more of a load status and a session status of the target service instance.

48. The apparatus according to claim 41, further comprising:
a fourth receiving module to: before receiving the second computing access packet, receive static attribute information of the target service instance collected by the target proxy device, wherein the static attribute information comprises a name of the target computing service;
a second sending module to: if the address of the target computing service corresponding to the name of the target computing service is not stored in the second gateway device, send the static attribute information to an operation and maintenance platform in the computing network;
a fifth receiving module to: receive the address of the target computing service allocated by the operation and maintenance platform for the target computing service based on the static attribute information.

49. The apparatus according to claim 48, further comprising:
a third sending module to: after obtaining the address of the target computing service, send a routing protocol announcement to the first gateway device, wherein the routing protocol announcement comprises the static attribute information and dynamic attribute information of the target service instance.

50. The apparatus according to any one of claims 46 to 49, wherein the static attribute information comprises one or more of: the address of the target computing service, a name of the target computing service, a service type of the target computing service, an address of the target service instance, a location of the target service instance, a priority of the target service instance, and a capability of the target service instance.

51. The apparatus according to any one of claims 41 to 49, wherein the address of the computing service consists of a preset address prefix and an identity of the computing service;
an address of each computing service comprised in the first computing routing table and the second computing routing table is represented by the identity of the computing service.

52. The apparatus according to any one of claims 41 to 49, wherein the address of the computing service and the address of the service instance are respectively in a same form as an Internet Protocol, IP, address.

53. A computing access apparatus, which is applied to an operation and maintenance platform, wherein the apparatus comprises:
a first obtaining module, to obtain a name of a target computing service from a client;
a first determining module, to determine an address of the target computing service corresponding to the name of the target computing service based on a pre-stored correspondence between a name of a computing service and an address of the computing service;
a first sending module, to send the address of the target computing service to the client, so that the client accesses a target service node, where a target service instance that provides the target computing service is located, through a first gateway device and a second gateway device in a computing network based on the address of the target computing service, wherein the client accesses the computing network through the first gateway device, and the target service node accesses the computing network through the second gateway device.

54. The apparatus according to claim 53, wherein the first obtaining module is specifically to receive the name of the target computing service sent by a domain name system, DNS, server, wherein the name of the target computing service is a domain name extracted by the DNS server from a domain name resolution request sent by the client.

55. The apparatus according to claim 53, further comprising:
a second determining module to: after determining the address of the target computing service, determine an address of the target service instance corresponding to the address of the target computing service based on a pre-stored correspondence between an address of a computing service and an address of a service instance that provides the computing service;
a generating module, to generate a second computing routing table from the second gateway device to the target service node based on the address of the target service instance, wherein the second computing routing table comprises an address of a computing service and an address of a proxy device of a service instance that provides the computing service;
a second sending module, to send the second computing routing table to the second gateway device.

56. The apparatus according to claim 53, further comprising:
a second obtaining module to: before obtaining the name of the target computing service from the client, obtain static attribute information of the target service instance from the second gateway device, wherein the static attribute information comprises the name of the target computing service;
an allocation module, to allocate the address of the target computing service for the target computing service based on the static attribute information;
a third sending module, to send the address of the target computing service to the second gateway device.

57. The apparatus according to claim 56, wherein the static attribute information further comprises one or more of: the address of the target computing service, a service type of the target computing service, an address of the target service instance, a location of the target service instance, a priority of the target service instance, and a capability of the target service instance.

58. The apparatus according to any one of claims 53 to 57, wherein the address of the computing service and the address of the service instance are respectively in a same form as an Internet Protocol, IP, address.

59. A computing access apparatus, which is applied to a client that accesses a computing network through a first gateway device, wherein the apparatus comprises:
an obtaining module, to obtain an address of a target computing service;
a generating module, to generate a first computing access packet whose destination address is the address of the target computing service ;
a sending module, to send the first computing access packet to the first gateway device, wherein the client accesses the computing network through the first gateway device, so that the first gateway device sends the first computing access packet through the second gateway device to a target service node, where a target service instance that provides the target computing service is located, and the target service node accesses the computing network through the second gateway device.

60. The apparatus according to claim 59, wherein the obtaining module is specifically to:
send a domain name resolution request to a domain name system, DNS, server, wherein a domain name comprised in the domain name resolution request is a name of the target computing service;
receive the address of the target computing service corresponding to the name of the target computing service fed back by the DNS server.

61. The apparatus according to claim 59 or 60, wherein the address of the target computing service consists of a preset address prefix and an identity of the target computing service;
in computing routing tables stored in the first gateway device and the second gateway device, the address of the target computing service is represented by the identity of the target computing service.

62. The apparatus according to claim 59 or 60, wherein the address of the target computing service and an address of the target service instance are respectively in a same form as an Internet Protocol, IP, address.

63. A network device, which comprises a processor and a machine-readable storage medium, wherein the machine-readable storage medium stores machine-executable instructions thereon, which can be executed by the processor, to cause the processor to carry out the method according to any one of claims 1 to 9, or carry out the method according to any one of claims 10 to 21, or carry out the method according to any one of claims 22 to 27, or carry out the method according to any one of claims 28 to 31.

64. A computer-readable storage medium, which stores a computer program thereon, wherein the computer program, when executed by a processor, carries out the method according to any one of claims 1 to 9, or carries out the method according to any one of claims 10 to 21, or carries out the method according to any one of claims 22 to 27, or carries out the method according to any one of claims 28 to 31.

65. A computer program product which, when running on a computer, causes the computer to carry out the method according to any one of claims 1 to 9, or carry out the method according to any one of claims 10 to 21, or carry out the method according to any one of claims 22 to 27, or carry out the method according to any one of claims 28 to 31.
